(19) **Europäisches Patentamt / European Patent Office / Office européen des brevets**

(11) **EP 2 134 871 B1**

(12) **EUROPEAN PATENT SPECIFICATION**

(45) Date of publication and mention of the grant of the patent:
**07.03.2012 Bulletin 2012/10**

(21) Application number: **08742395.0**

(22) Date of filing: **27.03.2008**

(51) Int Cl.:
***G01N 21/64*** *(2006.01)*

(86) International application number:
**PCT/US2008/004148**

(87) International publication number:
**WO 2008/121374 (09.10.2008 Gazette 2008/41)**

(54) **SYSTEMS AND METHODS FOR ENHANCING FLUORESCENT SIGNALS**

SYSTEM UND VERFAHREN ZUR VERSTÄRKUNG VON FLUORESZENZSIGNALEN

SYSTÈMES ET PROCÉDÉS PERMETTANT DE RENFORCER DES SIGNAUX FLUORESCENTS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.03.2007 US 921167 P**

(43) Date of publication of application:
**23.12.2009 Bulletin 2009/52**

(73) Proprietor: **Pacific Biosciences of California, Inc.**
**Menlo Park, CA 94025 (US)**

(72) Inventors:
- **KORLACH, Jonas**
  **Newark, CA 94560 (US)**
- **SAMIEE, Kevan**
  **Mountain View, CA 94041 (US)**
- **TURNER, Stephen, W.**
  **Menlo Park, CA 94025 (US)**
- **FREUDENTHAL, Jake**
  **San Carlos, CA 94070 (US)**

(74) Representative: **Kiddle, Simon John et al**
**Mewburn Ellis LLP**
**33 Gutter Lane**
**London**
**EC2V 8AS (GB)**

(56) References cited:
**WO-A1-00/53805          US-A- 6 136 543**
**US-A1- 2001 053 521     US-A1- 2004 241 678**

- **MATVEEVA ET AL: "Myoglobin immunoassay based on metal particle-enhanced fluorescence" JOURNAL OF IMMUNOLOGICAL METHODS, ELSEVIER SCIENCE PUBLISHERS B.V., AMSTERDAM, NL, vol. 302, no. 1-2, 1 July 2005 (2005-07-01), pages 26-35, XP005008039 ISSN: 0022-1759**
- **LEVENE M J ET AL: "Zero-mode waveguides for single-molecule analysis at high concentrations" SCIENCE, AMERICAN ASSOCIATION FOR THE ADVANCEMENT OF SCIENCE, WASHINGTON, DC; US, vol. 299, no. 5607, 31 January 2003 (2003-01-31), pages 682-686, XP002341055 ISSN: 0036-8075**
- **TROY ET AL. J. BIOMED. OPTICS vol. 6, April 2001, pages 167 - 176, XP008122568**

## Description

## BACKGROUND OF THE INVENTION

Detection of fluorescence is the dominant detection modality in molecular biology. Fluorescence is highly sensitive, permitting detection of single molecules in a variety of assays, including, e.g., nucleic acid sequencing, amplification and hybridization. Single molecule detection can be performed using pico to nanomolar concentrations of fluorophore for individual molecule detection, or extremely small observation volumes can be used to detect individual molecules up to, e.g., micromolar reagent concentrations. For example, "zero-mode waveguide" (ZMW) arrays, constructed from arrays of subwavelength holes in metal films can be used to reduce the observation volume of a sample of interest for single molecule detection during processes such as nucleic acid sequencing. See, e.g., Levene et al. (2003) Zero-Mode Waveguides for Single Molecule Analysis at High Concentrations" Science 299:682-686.

Although fluorescence is sensitive enough to perform single molecule detection, there is still room to improve detection limits in such protocols. The detection of a fluorophore is typically limited by the quantum yield of the fluorophore at issue, fluorescence lifetime, autofluorescence in a sample being analyzed and in the detection optics of the relevant detection system, photostability of the fluorophore, and photodamage effects of excitation light on an analyte or reactant of interest. The cost of the relevant analysis system is also an issue, with, for example, the need for high energy excitation light sources.

A variety of approaches have been taken to improve fluorescent detection limits and reduce the costs associated with the relevant analysis system. These include optimization of detection system optics, use of enhancers to increase quantum yield, etc. For example, excitation light can be reflected through the sample multiple times to improve quantum yield, without increasing the output of the excitation source (e.g., Pinkel et al. SPECIMEN ILLUMINATION APPARATUS WITH OPTICAL CAVITY FOR DARK FIELD ILLUMINATION 5,982,534). Fluorescent emissions that occur in a direction other than towards system detection optics can also be redirected towards the system detection optics, improving the percentage of emission photons detected by the system (e.g., White et al. SIGNAL ENHANCEMENT FOR FLUORESCENCE MICROSCOPY 6,169,289). Quantum yield enhancers such as silver particles have been used to enhance fluorescence in samples (reviewed in Aslan et al. (2005) "Metal-enhanced fluorescence: an emerging tool in biotechnology" Current Opinion in Biotechnology 16:55-62). This can result in detection of intrinsic fluorescence of certain molecules such as DNA, even without the use of fluorescent labels (Lakowicz et al. (2001) "Intrinsic Fluorescence from DNA Can Be Enhanced by Metallic Particles" Biochemical and Biophysical Research Communications 286:875-879).

US2004/0241678 discloses a method for determining the sequence of a polynucleotide comprising immobilizing an enzyme such as a DNA polymerase on a surface and detecting optically an effect consequent on the interaction of the enzyme and polynucleotide, wherein a metal particle is positioned on or proximal to the enzyme to enhance the detected signal. However, this method is based on detection by Raman spectroscopy.

Additional compositions and methods that enhance optical, e.g., fluorescent detection would be highly desirable and can be used to develop new applications that rely on such improved detection methods. The present application provides these and other features that will be apparent upon compete review of the following.

## SUMMARY OF THE INVENTION

The present invention provides enhanced signal detection of polymerase enzymatic products, particularly in low copy number analyte applications. This is achieved by placing the enzyme on a surface in proximity to a metal particle, such as a silver island film (a film that includes deposits of typically sub-wavelength sized silver particles), thereby providing metal enhanced fluorescence of the product, and/or increased plasmon resonance of the particle. Fluorescence or plasmon resonance is enhanced by incorporating multiple detectable labels into nucleotides that yield a fluorescent product upon incorporation of the nucleotide into a nucleic acid. The use of multiple labels can additively provide for increased signal strength in assays that rely on nucleotide label detection, such as DNA sequencing. Multiply labeled nucleotides are used in combination with metal particle proximity to further enhance signal strength. Signal strength, and signal to noise ratios can also be further enhanced by reflecting illumination light into a sample multiple times, thereby increasing illumination light in the sample, and even further by reflecting optical (e.g., fluorescent) signals traveling away from system detection optics back towards the detection optics, thereby capturing an increased percentage of, e.g., fluorescent signal photons produced by the sample.

Accordingly, in a first aspect, the invention provides compositions, systems and/or apparatus that include a first surface with a metallic particle on it and a nucleotide comprising two or more fluoresent labels. The surface also includes a polymerase enzyme on the surface proximal to the metallic particle. In system/ apparatus embodiments, a signal detector is positioned to detect a signal produced by an action of the enzyme. In general the enzyme is positioned proximal to the metallic particle such that a signal generated by the two or more fluorescent labels cleaved from the nucleotide by an action of the enzyme is increased by proximity to the metallic particle.

The surface can include, e.g., a ceramic, glass, plastic or polymer slide, channel or well. The metallic particle can be any particle that can increase signal strength, such as a silver particle, e.g., a sub-wavelength particle of a silver island film deposited on the surface. The surface can be comprised within or proximal to a zero mode waveguide (ZMW) or other structure of interest, e.g., a channel, well, groove, optical confinement device or feature, or the like.

Thus, in one aspect, the invention provides a surface comprising a zero mode waveguide (ZMW), wherein the surface comprises a metallic or magnetic particle and an enzyme disposed proximal to or within the ZMW. The particle can include any material noted herein, e.g., silver, gold, copper, titanium, chromium, or the like. In one useful aspect, the enzyme is bound to the particle, which can be disposed within the ZMW. Alternately, the particle can be disposed on a wall of the ZMW and the particle can be positioned proximal to the enzyme, such that the particle enhances fluorescence of a product produced by the enzyme.

For the embodiments herein, the polymerase can be any polymerase that can operably be coupled to a surface. Examples include DNA polymerases, RNA polymerases and reverse transcriptases. Preferred examples include a Taq polymerase, an exonuclease deficient Taq polymerase, an E. coli DNA Polymerase 1, a DNA polymerase Klenow fragment, a reverse transcriptase, a wild type Φ29 polymerase, a mutant Φ29 polymerase, an exonuclease deficient Φ29 polymerase, a T7 DNA polymerase, and a T5 DNA polymerase.

Typically, the enzyme and/or particle is coupled (e.g., covalently or through a strong binding partner interaction) to the first surface. The enzyme or particle can be coupled directly or through a linker moiety. Preferably, the enzyme and the metallic particle are located on the surface at a distance that optimizes a signal produced (directly or indirectly) as a result of action of the enzyme on a substrate. This can include, e.g., release of a fluorophore from an enzyme substrate. In system and/or apparatus embodiments, the enzyme or metallic particle can optionally be coupled to a second surface located proximal to the first surface, e.g., on a wall of a well or channel structure that is proximal another wall (e.g., side, or top or bottom) of the structure.

Preferably, the enzyme and/or particle is deposited as part of a population of enzymes or particles selectively deposited on the first surface. This selective deposition can be regular (uniform) or irregular, depending on the desired conformation of the composition, system or apparatus. However, the enzyme or particle can alternatively be randomly deposited.

The enzyme product comprises two or more fluorescent moieties that fluoresce to produce the signal. The increase in the signal can be an increased radiative decay rate or quantum yield for the fluorescent moiety, caused by proximity to the particle. The enzyme product can directly or indirectly generate the detectable signal. For example, the enzyme product can directly generate the signal, e.g., by generating a fluorescent signal, or, alternately, the product can include a fluorescent moiety that fluoresces, increasing surface plasmon resonance (SPR) of a proximal metal particle, with the signal including the (detectable) increase in plasmon resonance.

The composition is useful in, and the system optionally includes, a nucleic acid sequencing system that, during operation, is capable of sequencing at least one nucleic acid template. Sequencing systems represent one preferred embodiment of the invention.

In system and apparatus embodiments, an illumination source illuminates the enzyme, particle or substrate, and the metallic particle is smaller in at least one dimension than a wavelength of light from the illumination source. A signal detector detects, e.g., optical phenomena, fluorescence, SPR, Raman scattering, stimulated Raman scattering, mie scattering, surface enhanced Raman scattering, or the like. In one preferred aspect, the illumination source and the detector are configured for epi-illumination and detection.

The system, device or composition can include an interference structure that interferes with detection of the signal, such as a wall, grate, or the like. Such structures occur in various devices and systems such as waveguides, microfluidic or nanofluidic apparatus, and/or the like. Optionally, the enzyme and metallic particle are located distal to the interference structure, thereby reducing signal interference caused by the interference structure. For example, the interference structure can be a wall of a ZMW, wherein the enzyme and metallic particle are located on the first surface at a point distal to the wall of the ZMW, reducing interference caused by any signal dampening effect caused by the wall.

In related aspects, the invention provides methods of obtaining an enhanced signal from a polymerase enzyme reaction. The methods include coupling the enzyme to a first surface proximal to a metallic particle, where proximity to the particle enhances a fluorescent signal generated by two or more fluoresent labels cleaved from a labelled nucleotide through a reaction mediated by the enzyme. The method also includes performing a polymerization reaction mediated by the enzyme, where the signal produced by the product of the reaction is increased by proximity of the product to the metal surface.

All of the features noted above for the compositions, systems and apparatus are applicable to the methods of the invention as well, and vice-versa. For example, the method can include detecting the fluorescent signal. Typically, proximity of the product to the particle causes the product to display an enhanced quantum yield or radiative rate, thereby enhancing the signal from the reaction. Alternatively, the signal can be a surface plasmon resonance signal indirectly generated by the product by exciting plasmon resonance in the particle. Enzymes, particles and surfaces used in the methods can be any of those noted with respect to the compositions, systems and apparatus of the invention, having any of the configurations noted.

The site of the reaction can be illuminated using an illumination source as discussed with respect to the system embodiments herein. Optionally, light from the illumination source can be reflected one or more times through the reaction site, thereby increasing illumination of the sample. Fluorescent signals traveling away from detection optics can be reflected towards the detection optics, increasing sensitivity of the apparatus, systems and methods of the invention. Light is optionally reflected through the reaction site by total internal reflection or by the use of reflective surfaces.

The method optionally includes recording the enhanced signal, e.g., in a computer readable medium. Any typical recording device such as a hard drive, optical storage device or floppy drive can be used to record detected signals. Signals can also deconvoluted to provide, e.g., sequence information or other biochemical assay information, e.g., in sequencing or assay systems of the invention. Signal processing equipment can include, e.g., a computer having appropriate software for converting signals into sequence or assay parameter information.

The distance between the enzyme and the metallic particle can be selected by fixing the enzyme and particle to the surface in a selected spatial arrangement, thereby tuning the quantum yield or radiative rate. Further, the enzyme and metallic particle can be placed distal to any signal interference structure (e.g., wall, grate or other feature) located proximal to the surface, thereby reducing a signal interference effect of the structure on the signal.

In addition to tuning signal intensity through proximity of an enzyme product to metal particles/surfaces, the present invention provides additional features for enhancing product signals. In one aspect, the product includes two or more detectable labels, thereby increasing overall signal strength of the product. Such products can include any product of an enzymatic reaction. Substrates can also include the labels, e.g., prior to cleavage of the labels from the substrate, or other signal generating event.

For example, in one particularly preferred aspect, the invention includes a composition that includes an artificial nucleotide comprising two or more fluorescent labels, wherein at least two of the labels are detectable. The artificial nucleotide can be incorporated into a nucleic acid, e.g., through the action of a polymerase during a nucleic acid sequencing reaction. The two or more labels are cleaved from the nucleotide through the action of the polymerase and detected.

While often discussed herein for convenience in terms of two labels, such nucleotides can include more than two, e.g., three or more, four or more, five or more, six or more, seven or more, eight or more, nine or more, or even 10 or more optical labels. The labels will be fluorescent labels. The labels can be coupled to the nucleotide or to each other via a linker, which can be a rigid linker (holding the labels in a fixed orientation) or flexible linker. Typically, the optical labels are other than an energy transfer pair, e.g., where at least two of the optical labels, when cleaved from the nucleotide, fluoresce when exposed to light at a single excitation wavelength. This provides, e.g., an additive signal, where the overall observed radiative rate/ quantum yield of the two or more fluorophores is the sum of the radiative rate/ quantum yield of each of the fluorophores. Thus, typically, at least two of the optical labels will fluoresce at the same emission wavelength when cleaved from the nucleotide.

A variety of natural and artificial nucleotides are known and can be adapted to the present invention by attaching 2 or more detectable fluorophores (e.g., other than a FRET pair), to the nucleotide. This attachment can be at one or more of: a phosphate, base, or sugar moiety of the nucleotide. In one preferred class of embodiments, the nucleotide is a phosphate analogue of a naturally occurring nucleotide. In such embodiments, a polymerase cleaves, e.g., extra phosphates from the nucleotide upon incorporation of the nucleotide into a nucleic acid by the action of a polymerase. If the labels are coupled to unnatural added phosphate moieties, the labels are released from the nucleotide upon incorporation of the nucleotide into the nucleic acid, generating a detectable signal. Thus, in one preferred embodiment, the nucleotide analogue is a phosphate analogue of a naturally occurring nucleotide that has between 4 and 6 phosphate groups. In embodiments that do include FRET pairs, at least two fluorophores are typically still detectable, e.g., where two or more FRET pairs are present in the nucleotide.

Compositions comprising the artificial nucleotide can additionally include other components relevant to the use of the nucleotide. For example, the compositions can include an enzyme capable of incorporating the nucleotide into a nucleic acid polymer, one or more template nucleic acids, reagents relevant to use of the nucleotide in a specific reaction (e.g., sequencing reagents), or the like. For example, the compositions can include an enzyme such as a polymerase, a reverse transcriptase, or a terminal transferase.

Kits that include such compositions of the invention, e.g., packaged for use in a sequencing assay are a feature of the invention. For example, a kit can include a first container containing a composition comprising the nucleotide, and can additionally include one or more additional vials comprising buffers, enzymes, sequencing reagents, template nucleic acids, control materials, etc., optionally in combination with instructions for use of the kit components, e.g., for nucleic acid sequencing.

In a related aspect, the invention provides methods of detecting incorporation of a labeled nucleotide into a nucleic acid. The methods include incubating a nucleotide comprising two more fluorescent labels with a polymerase enzyme that incorporates the nucleotide into a nucleic acid. The enzyme cleaves the labels from the nucleotide during or upon incorporation of the nucleotide into the nucleic acid, thereby producing a detectable signal. The signal is detected, verifying incorporation of the nucleotide into the nucleic acid, and providing an indication of the sequence of a template nucleic acid.

For example, the enzyme can be a template-dependent polymerase and the method can include correlating the detectable signal with a position of a nucleotide of a template nucleic acid, thereby providing sequence information for the template nucleic acid.

Systems and methods that are optimized for low copy number analyte detection are also a feature of the invention. In these systems and methods, illumination light is multiply reflected in a sample, and/or fluorescent emissions from an analyte in the sample are redirected towards detection optics.

Thus, in one example, an epifluorescent signal detection system is provided. The system includes a sample stage configured to receive a sample holder, the sample stage comprising a sample viewing region; an integrated illumination source and fluorescence detector configured to illuminate the sample viewing region and to detect fluorescence from a sample; and, at least one reflective surface configured to reflect illumination light that passes through the sample viewing region back through the sample viewing region at least once.

Typically, the sample stage is configured to receive a sample holder that comprises one or more optical or sample confinement features. For example, the sample stage can be configured to receive a microscope slide, a microfluidic device, a device comprising one or more nanostructures, or a zero mode waveguide.

In one preferred embodiment, the sample holder is configured to achieve total internal reflection of illumination light, thereby reflecting the illumination light through the sample one or more times.

The integrated illumination source and fluorescence detector optionally comprises a lens configured to permit illumination light to pass through to the sample viewing region, and to permit a fluorescent signal from the sample viewing region to pass through to the detector. The integral illumination source and fluorescence detector can include a filter that permits a florescent signal from the sample to pass through to the detector, while inhibiting passage of stray or reflected illumination light to the detector.

Preferably, the reflective surface is positioned to avoid reflection of illumination light back to the integrated source and detector, reducing background autofluorescence in the detection optics. The system can include one or more, or two or more reflective surfaces positioned to reflect the illumination light through the sample more than once.

In a related aspect, the invention provides methods of performing epifluorescent signal detection. The methods include illuminating a sample that comprises a fluorescent moiety with illumination light; reflecting illumination light that passes through the sample one or more times back through the sample; and, detecting a fluorescent signal from the sample. The illumination light is produced from an illumination source that is integral with a detector that detects the illumination source.

All of the features noted with respect to the systems are applicable to this method as well. For example, the illumination light can be reflected through the sample more than once. The light is optionally reflected through the sample such that reflected illumination light is reflected in a direction substantially away from the detector.

The signal can be corresponded to a sequence of a nucleic acid template present in the sample. The method is particularly suited to cases where the nucleic acid template is present as a low or single copy in the sample of interest.

In an example class of embodiments, methods of increasing signal sensitivity for detection of a fluorescent signal produced during sequencing of a low copy number nucleic acid are provided. The method includes incubating a sequencing reaction under conditions that permit template nucleic acid dependent incorporation of one or more nucleotides into a copy nucleic acid, where the template nucleic acid is present at a low copy number. A sample comprising the sequencing reaction is illuminated, wherein light from an illumination source passes through the sample. At least a portion of the light that passes through the sample is reflected back through the sample at least once. The fluorescent signal resulting from the incorporation is detected, wherein reflected light in the sample increases the fluorescent signal strength. The sample can include 2 or fewer copies of the template, e.g., 1 copy of the template. Any of the features described in reference to the other methods are applicable here, e.g., the illumination source can be integral with a signal detector that detects the optical, e.g., fluorescent signal, illumination light can be reflected more than once through the sample, etc.

It should be appreciated that the above kits, compositions, systems, apparatus and methods are all useful in combination. For example, a system can include fluorescence enhancement by proximity of a polymerase reaction product to a metal particle, where a nucleotide to be incorporated by the polymerase includes two or more fluorescent labels, which are released by the action of the polymerase in proximity to the metal particle, while illumination light is multiply reflected through a sample comprising the reaction and while stray fluorescent signals are reflected towards the detection optics of the system.

Kits comprising any of the compositions of the invention, e.g., for use in the systems and apparatus to practice the methods of the invention are also a feature of the invention. The kits can include composition components of the invention packaged in containers, e.g., in conjunction with buffers, enzymes, nucleotides, reagents, etc. The kits can further include interface features (e.g., slides, slide holders, or the like) designed for use with the apparatus and systems of the invention. Instructions for practicing the methods can also be included.

## BRIEF DESCRIPTION OF THE DRAWING

Figure 1, Panels A and B schematically illustrate alternative embodiments positioning particles relative to surface bound enzymes to enhance optical signals of enzyme products.

Figure 2, Panels A and B schematically illustrate an array illumination system of the invention.

## DETAILED DESCRIPTION

The present invention provides a variety of compositions, apparatus, systems and methods for enhancing analyte signal strength and detection of analyte (e.g., fluorescent) signals. The features of the invention are particularly useful for the detection of low copy number analytes, e.g., for single molecule detection. This type of detection is useful to reduce reagent consumption during e.g., DNA sequencing reactions, and for the detection of rare analytes, as well as to reduce detection system costs by reducing the amount of illumination light required for detection.

Several related approaches are used to achieve enhanced signal production and detection. First, a polymerase enzyme is be placed on a surface in proximity to a metal particle, thereby providing metal enhanced fluorescence of the product, and/or increased plasmon resonance of the particle. Second, fluorescence or plasmon resonance is separately or additionally enhanced by incorporating multiple detectable labels into nucleotides that yield a fluorescent product, e.g., upon incorporation of the nucleotide into a nucleic acid. The use of multiple labels can provide increased signal strength in assays that rely on nucleotide label detection, such as DNA sequencing. These approaches can be used in combination, e.g., multiply labeled nucleotides are optionally used in combination with metal particle proximity to further enhance signal strength. Signal strength, and signal to noise ratios can also be further enhanced by reflecting illumination light into a sample multiple times, thereby increasing illumination light in the sample, and even further by reflecting stray fluorescent signals traveling away from system detection optics back towards the detection optics, thereby capturing an increased percentage of fluorescent signal produced by the sample.

## ENHANCING FLUORESCENCE OF ENZYME PRODUCTS USING METAL PARTICLES

One aspect of the present invention is the positioning of polymerase enzymes fixed to a surface in proximity to a metallic surface or particle such that fluorescence of a product of a reaction (e.g., release of a sequencing fluorophore) mediated by the enzyme is enhanced. The invention includes the ability to engineer the radiative rate of a product fluorophore by adjusting the type of fluorophore, the proximity of the product fluorophore to the metal surface/particle, and the type, shape and size of the metal surface or particle. This is accomplished by controlling position and, optionally, the orientation of the enzyme relative to the particle, as well as position, size, composition and shape of the particle, etc.

The effect of metals on fluorophores are relatively well understood in general and the application of these effects to engineering radiative rates can be applied to the present invention by adjusting enzyme/ particle position, composition and orientation. In general, the decay rates of fluorophores were shown to be modified by proximity to metallic surfaces as early as the 1970s (e.g., Drexhage (1974) "Interaction of light with monomolecular dye lasers" in Progress in Optics North Holland: Amsterdam 161-232). These effects do not require molecular contact between the metal and the fluorophore (Sokolov et al. (1998) "Enhancement of molecular fluorescence near the surface of colloidal metal films" Anal Chem. 70:3989-3905). Accordingly, in the present invention, direct molecular contact between metal particle/ surfaces and enzymes or enzyme products is optional, but not necessary when engineering fluorophore output.

Accordingly, the ability of metal surfaces to change fluorophore signal intensity relates to changes in the radiative decay rate for the fluorophore caused by proximity of the metal to the fluor. When performing a typical assay, the geometry of a sample volume is large relative to the size of a fluorophore in the sample, and is also large as compared to the absorption and emission wavelengths of the fluorophore. In this standard assay arrangement, the fluorophore radiates photons into the free space around it. The presence of metallic particles (or other metallic surfaces) near the fluorophore alters the free space condition around the fluorophore, which can result in changes in the emission properties of the fluorophore. Metal surfaces can increase or decrease radiative decay of the fluorophore, can affect quantum yield, and can alter resonance properties relevant to fluorescence resonance energy transfer (FRET), e.g., by increasing the extent of energy transfer during FRET. These effects result from the interactions of excited state fluorophores with free electrons in the metal surface (surface plasmon electrons) which produce various effects in the fluorophore.

In addition to affecting the radiative rate/ quantum yield of the fluorophore, the fluorophore can also excite plasmon resonance in the metal, which also provides a detectable phenomenon. Surface plasmons (polaritons) are electromagnetic waves that propagate along a metal/dielectric interface. Metals that support surface plasmons include silver and gold, as well as copper, titanium, and chromium. Particles or films of such particles can be used in the present invention. Surface Plasmon Resonance (SPR) reflectivity measurements can be used to detect enzyme products, by measuring SPR effects caused by proximity of a molecule to the surface of the metal particle. For further description of SPR methods, see, e.g., Hutter et al. (2004) "Exploitation of Localized Surface Plasmon Resonance." Adv. Mater. 16(19): 1685-1706; Aslan et al. (2005) "Plasmon light scattering in biology and medicine: new sensing approaches, visions and perspectives," Current Opinion in Chemical Biology 9:538-544 and Smith et al. "Surface Plasmon Resonance Imaging as a Tool to Monitor Biomolecular Interactions in an Array Based Format" Appl. Spectroscopy. 57:320A-332A.

In general, metal enhanced fluorescence (MEF) can be used to engineer the radiative rate ($\Gamma$) of selected fluorophores, or the proximity of the fluorophore can trigger a change in SPR that can be measured. For a review of MEF to enhance $\Gamma$, see Aslan et al. (2005) "Metal-enhanced fluorescence: an emerging tool in biotechnology" Current Opinion in Biotechnology 16:55-62. In general, the quantum yield ($Q_0$) and lifetime of a fluorophore ($\tau_0$) in free space are given by:

$$Q_0 = \Gamma/(\Gamma + k_{nr})$$

and

$$\tau_0 = 1/(\Gamma + k_{nr})$$

Where $k_{nr}$ is the non-radiative rate. The presence of a metal surface (m) increases the radiative rate by the addition of a new radiative rate $\Gamma_m$. The quantum yield in the metal surface proximity case ($Q_m$) is given by

$$Q_m = (\Gamma + \Gamma_m)/(\Gamma + \Gamma_m + k_{nr})$$

$$\tau_m = 1/(\Gamma + \Gamma_m + k_{nr})$$

Thus, as the value of $\Gamma_m$ increases, the quantum yield increases while the lifetime decreases (in contrast to the usual situation where fluorescence lifetime and quantum yield increase or decrease together). See Aslan, id and Lakowicz (2001) "Radiative decay engineering: biophysical and biomedical applications Anal Biochem 298:1-24.

As applied to the present invention, the proximity of metal surfaces such as sub wavelength sized silver or gold nanoparticles to enzyme reaction products results in a preferential increase in intensity of fluorophores in the products, with fluorophore lifetime decreasing as intensity increases. Contrawise, proximity of the fluorophore to the metal surface can also cause changes in plasmon resonance, which can be detected, e.g., spectroscopically.

Metal Particles/ Attachment to Surfaces

Standard metallurgical or chip fabrication approaches can be used to make metallic surfaces or surfaces that comprise metallic regions. Similarly, metal particles are attached to surfaces of interest, such as glass or polymer slides, using any of a variety of available methods. Standard chemical/ chip masking procedures can be used to direct placement/deposition of metals such as metal particles at desired locations.

For example, particle deposition on glass slides (e.g., silver particles, e.g., as in "silver island films") represents one preferred aspect of the invention. See also, Lakowicz et al. (2001) "Intrinsic Fluorescence from DNA Can Be Enhanced by Metallic Particles" Biochemical and Biophysical Research Communications 286:875-879. Silver, gold and other metals can be deposited using light deposition, electroplating onto glass or electrodes, electrochemical and laser mediated deposition approaches, etc. See also, Geddes et al. (2003) "Photodeposition of silver can result in metal enhanced fluorescence" Appl. Spectrosc 57:526-531 and Geddes et al. (2003) "Electrochemical and laser deposition of silver for use in metal enhanced fluorescence" Langmuir 19:6236-6241. The placement, size and shape of the particles can be varied.

Metal colloids and nanorods have been deposited to provide metal particles on a surface. See also, Alsan et al. (2005) "Fast and Slow deposition of Silver Nanorods on to glass substrates" J. Phys Chem B. and Geddes et al. (2003) "Metal enhanced fluorescence due to silver colloids on a planar surface" potential applications of indocyannine green to in vivo imaging" J. Phys. Chem A 107:3443-3449.

Thus, a variety of surface deposition techniques are available to deposit metal particles. For example, in silver island deposition, silver islands can be deposited on glass by reducing a silver salt with sodium hydroxide, ammonium hydroxide and glucose solutions while the glass is submersed. Alternately, silver colloids can be used to produce particles of homogeneous size on a substrate surface. See, e.g., Geddes et al. (2003), *above.* Gold and other materials can be similarly deposited. Nanostructures such as nanorods, nanospheres, nanoparticles, quantum dots, etc., can be deposited to produce structurally uniform or anisotropic nanostructures that enhance fluorescence caused by increased excitation fields at the edges of the nanostructures (Lakowicz et al. (2001) "Intrinsic Fluorescence from DNA Can Be Enhanced by Metallic Particles" Biochemical and Biophysical Research Communications 286:875-879).

Nanoparticles can be deposited directly using solution based deposition, or grown on the surface of interest from spherical metal colloids (Alsan et al. (2005) "Fast and Slow deposition of Silver Nanorods on to glass substrates" J. Phys Chem B.). As applied to the present invention, these colloids can be deposited at selected regions on the surface, which ultimately controls placement of the resulting nanostructures on the surface.

Available methods include light induced deposition, e.g., with a HeCd laser. *See also,* Geddes et al. (2003) "Electrochemical and laser deposition of silver for use in metal enhanced fluorescence" Langmuir 19: 6236-6241. By using standard chip masking strategies, light mediated deposition can be used to precisely position metal particles on a surface, e.g., in the context of the present invention, proximal to an enzyme. Complex (e.g., "fractal like") metal nanostructures have also been deposited onto glass substrates, see, e.g., Geddes et al. (2003) "Photodeposition of silver can result in metal enhanced fluorescence" Appl. Spectrosc 57:526-531; see also, Aslan et al. (2005) "Metal-enhanced fluorescence: an emerging tool in biotechnology" Current Opinion in Biotechnology 16:55-62.

ATTACHING AND ORIENTING ENZYMES TO SUBSTRATES IN PROXIMITY TO METALLIC SURFACES/PARTICLES

The ability to couple active enzymes to surfaces for readout of an assay such as a sequencing reaction is useful in a variety of settings. For example, any enzyme activity can be measured by binding the enzyme to a surface in proximity to the metallic particle (e.g., attached to the surface as noted above) and performing the relevant assay. The ability to bind the enzyme to the surface in proximity to the particle has several advantages, including, but not limited to: the ability to purify, capture and assess enzyme reactions on a single surface; the ability to re-use the enzyme by washing ligand and reagents off of the surface between uses; the ability to format bound enzymes into a spatially defined set of reactions by selecting where and how the enzyme is bound onto the surface, facilitating monitoring of the reactions (e.g., using available array or ZMW detectors); the ability to perform and detect single-molecule reactions at defined sites on the surface (thereby reducing reagent consumption); the ability to monitor multiple different enzymes on a single surface to provide a simple readout of multiple enzyme reactions at once, e.g., in biosensor applications, and many others.

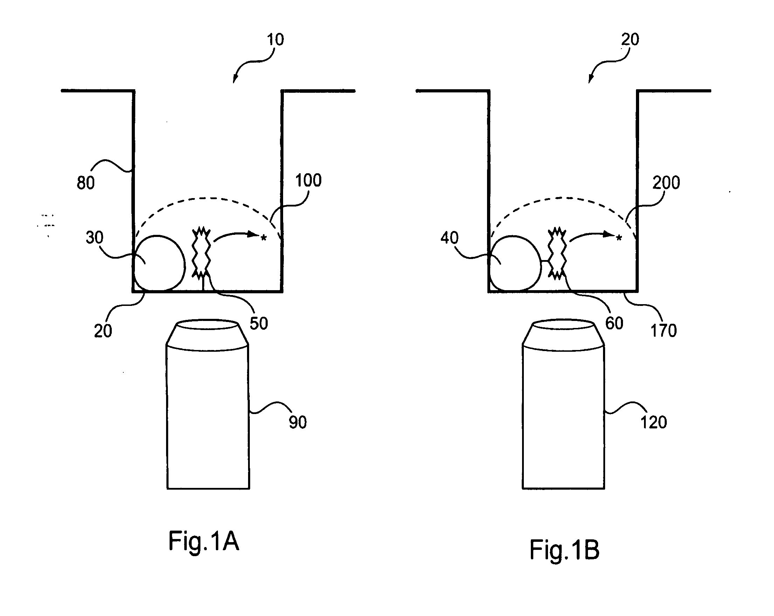

Two simple non-limiting illustrative examples for positioning the enzyme relative to a particle are schematically illustrated in Figure **1,** panels **A** and **B.** Components are not necessarily to scale. As shown, wells (e.g., ZMWs) **10** and **20** have particles **30** and **40,** as well as enzymes **50** and **60** disposed in the wells. As shown in Panel **A,** enzyme **50** can be fixed to well surface/bottom **70,** which can be positioned a specific distance from well wall **80** (e.g., to optimize enhancement by wall **80,** e.g., where wall **80** comprises one or more material that enhances an optical signal; or to reduce interference by the wall where proximity to the wall decreases fluorescence). Enzyme **50** can additionally, or alternatively, be positioned relative to particle **30,** e.g., by fixing the position of particle **30** in the well (e.g., by chemically or mechanically fixing it to a wall or bottom of the well, e.g., wall **80** and/or bottom **70** as shown. Detector **90,** which optionally includes epifluorescent or other detection optics appropriate to the system, and which can optionally include integrated illumination optics can be used to view observation volume 100, e.g., to detect optically detectable (e.g., fluorescent) product (schematically depicted as "*"). Figure **1,** panel **B** depicts an alternate embodiment, in which enzyme **60** is bound to particle **40,** which can be bound to well surface (e.g., wall or bottom) **170,** e.g., in a fixed orientation (e.g., using chemical linkers or by mechanically mating the particle and the surface). Here again, detector **190** can detect product * in observation volume **200.** Many alternate embodiments, variations and specific implementations are discussed herein.

Enzymes can be attached and oriented on a surface in proximity to a metallic region/surface/particle by controlling coupling of the enzyme to the surface. Examples of approaches for controllably coupling enzymes to a surface while retaining activity, e.g., by controlling the orientation of the enzyme and the distance of the enzyme from the surface are found, e.g., in Hanzel et al. PROTEIN ENGINEERING STRATEGIES TO OPTIMIZE ACTIVITY OF SURFACE ATTACHED PROTEINS, 11/645, 135; further details regarding orienting and coupling polymerases to surfaces such that activity is retained are found in Hanzel et al. ACTIVE SURFACE COUPLED POLYMERASES, 11/645,125. Further details are found below.

Enzymes to be coupled to the surface

Generally, an enzyme is a molecule that catalyzes a reaction of interest. Typically, the enzyme is or comprises a polypeptide. A variety of polypeptide enzymes are known, e.g., polymerases (e.g., DNA polymerases, RNA polymerases, reverse transcriptases, terminal transferases), helicases, kinases, caspases, phosphatases, terminal transferases, endonucleases, exonucleases, dehydrogenases, proteases, beta-lactamase, beta-galactosidases, luciferases, etc.

Known polypeptide enzymes have been grouped into six classes (and a number of subclasses and sub-subclasses) under the Enzyme Commission classification scheme (*see,* e.g. the Nomenclature Committee of the International Union of Biochemistry and Molecular Biology enzyme nomenclature pages, on the world wide web at www(dot)chem(dot)qmul(dot)ac(dot)uk/iubmb/enzyme), namely, oxidoreductase, transferase, hydrolase, lyase, ligase, and isomerase. Any of these general classes of enzymes can be bound to a surface in proximity to a metal surface/particle using the various strategies herein.

Accordingly, the enzyme to be coupled to a surface can be essentially any enzyme. For example, the enzyme can be an oxidoreductase from any one of EC subclasses 1.1-1.21 or 1.97, a transferase from any one of EC subclasses 2.1-2.9 (e.g., a nucleotidyltransferase from sub-subclass 2.7.7, e.g., a DNA-directed DNA polymerase from 2.7.7.7), a hydrolase from any one of EC subclasses 3.1-3.13, a lyase from any one of EC subclasses 4.1-4.6 or 4.99, an isomerase from any one of EC subclasses 5.1-5.5 or 5.99, or a ligase from any one of EC subclasses 6.1-6.6.

The enzymes used in the present invention are polymerases. Notwithstanding the foregoing, a wide variety of pharmaceutically relevant enzyme types are of significant interest in conjunction with the present invention, as their immobilization provides readily analyzable formats for screening for inhibitors, modulators and effectors to such enzyme systems. Such enzymes include kinases, phosphatases, proteases, as well as the aforementioned nucleic acid enzymes.

DNA polymerases

One preferred class of enzymes of the invention that can be fixed to a surface are DNA polymerases. For example, DNA template-dependent DNA polymerases have relatively recently been classified into six main groups based upon various phylogenetic relationships, e.g., with E. coli Pol I (class A), E. coli Pol II (class B), E. coli Pol III (class C), Euryarchaeotic Pol II (class D), human Pol beta (class X), and E. coli UmuC/DinB and eukaryotic RAD30/xeroderma pigmentosum variant (class Y). For a review of recent nomenclature, see, e.g., Burgers et al. (2001) "Eukaryotic DNA polymerases: proposal for a revised nomenclature" J Biol Chem. 276(47): 43487-90. For a review of polymerases, see, e.g., Hübscher et al. (2002) EUKARYOTIC DNA POLYMERASES Annual Review of Biochemistry Vol. 71: 133-163; Alba (2001) "Protein Family Review: Replicative DNA Polymerases" Genome Biology 2(1): reviews 3002.1-3002.4; and Steitz (1999) "DNA polymerases: structural diversity and common mechanisms" J Biol Chem 274:17395-17398.

For example, when the enzyme is a DNA polymerase, the polymerase can be, e.g., any of the Taq polymerases, exonuclease deficient Taq polymerases, E. coli DNA Polymerase 1, Klenow fragment, reverse transcriptases, Φ29 related polymerases including wild type Φ29 polymerase and derivatives of such polymerases such as exonuclease deficient forms, T7 DNA Polymerase, T5 DNA Polymerase, etc. Further details regarding DNA polymerases, including DNA polymerases that comprise mutations that improve the ability of the polymerase to incorporate unnatural nucleotides (useful in a variety of sequencing and labeling applications), are found in 11/645,223 "POLYMERASES FOR NUCLEOTIDE ANALOGUE INCORPORATION" by Hanzel et al. and in Hanzel et al. ACTIVE SURFACE COUPLED POLYMERASES, 11/645,125.

Coupling domains

Enzymes can conveniently be coupled to a surface in proximity to a metallic surface or particle by coupling the enzyme through an available artificial coupling domain, e.g., using any available coupling chemistry of interest. A particle can similarly be coupled to a surface using any available coupling chemistry. An artificial surface coupling domain is a moiety that is heterologous to the enzyme (or particle) of interest, and that is capable of binding to a binding partner that is coupled or bound to (and/or integral with) a surface. For convenience in enzyme aspects, the coupling domain will often be expressed as a fusion domain of the overall enzyme protein, e.g., as a conventional in-frame fusion of a surface coupling domain polypeptide sequence with the active enzyme (e.g., a poly-His tag fused in frame to an active enzyme sequence). However, coupling domains can also be added chemically to the protein, e.g., by using an available amino acid residue of the enzyme, or by incorporating an amino acid into the protein that provides a suitable attachment site for the coupling domain. Suitable residues of the enzyme can include, e.g., histidine, cysteine or serine residues (providing for N, S or O linked coupling reactions), or glycosylation sites (e.g., the binding partner can be an antibody or receptor that binds to a polysaccharide glycosylation structure of the coupling domain). Unnatural amino acids that comprise unique reactive sites can also be added to the enzyme, e.g., by expressing the enzyme in a system that comprises an orthogonal tRNA and an orthogonal synthetase that incorporates the unnatural amino acid during polypeptide synthesis in response to a selector codon.

A single type of coupling domain, or more than one type can be included. 1, 2, 3, 4, 5... 10 or more coupling domains (which are optionally the same, or are optionally different domains) can be included in the enzyme. Furthermore each domain can have 1, 2, 3, 4, 5...10 or more different surface coupling elements. For example, a large surface coupling domain, e.g., a domain that includes a polypeptide domain of at least 5 kDa, and preferably larger, can optionally include multiple surface coupling elements. In contrast, a small coupling domain such as a poly-His domain optionally includes a single coupling element (e.g., a poly-His sequence). Thus, large coupling domains can include multiple coupling elements, and enzymes of the invention can include one or more large coupling domains, and/or two or more coupling domains in general. The use of multiple coupling domains is particularly advantageous in coupling the enzyme in a specific orientation relative to the metallic particle or surface, as well as with respect to an overall surface/substrate to which both the enzyme and particle are coupled.

Types Of Coupling Domains/Elements

Example coupling domains (which can be coupled to the enzyme, e.g., as an in frame fusion domain or as a chemically coupled domain) include any of: an added recombinant dimer enzyme or portion or domain of the enzyme, a large extraneous polypeptide domain, a polyhistidine tag, a HIS-6 tag, a biotin, an avidin sequence, a GST sequence, a glutathione, a AviTag sequence, an S tag, an antibody, an antibody domain, an antibody fragment, an antigen, a receptor, a receptor domain, a receptor fragment, a ligand, a dye, an acceptor, a quencher, and/or a combination thereof. The artificial surface coupling domains can include purification tags which are used, e.g., for enzyme purification, e.g., prior to binding of the enzyme to the surface (optionally through these same purification tags, or, optionally through different or additional surface binding domains), or concomitant with binding to the surface (e.g., the surface is optionally used for affinity capture of the enzyme). See also, Hanzel et al. PROTEIN ENGINEERING STRATEGIES TO OPTIMIZE ACTIVITY OF SURFACE ATTACHED PROTEINS, 11/645,135.

A large number of tags are known in the art and can be adapted to the practice of the present invention by being incorporated as coupling domains/ elements for coupling the enzyme to a surface and/or in a specific orientation relative to the metallic surface/particle. For example, see, e.g.: Nilsson et al. (1997) "Affinity fusion strategies for detection, purification, and immobilization of recombinant proteins" Protein Expression and Purification 11: 1-16, Terpe et al. (2003) "Overview of tag protein fusions: From molecular and biochemical fundamentals to commercial systems" Applied Microbiology and Biotechnology 60:523-533, and references therein. Tags that can be used to couple the enzyme to the surface through binding to an immobilized binding partner include, but are not limited to, a polyhistidine tag (e.g., a His-6, His-8, or His-10 tag) that binds immobilized divalent cations (e.g., $Ni^{2+}$), a biotin moiety (e.g., on an in vivo biotinylated polypeptide sequence) that binds immobilized avidin, a GST (glutathione S-transferase) sequence that binds immobilized glutathione, an S tag that binds immobilized S protein, an antigen that binds an immobilized antibody or domain or fragment thereof (including, e.g., T7, myc, FLAG, and B tags that bind corresponding antibodies), a FLASH Tag (a high affinity tag that couples to specific arsenic based moieties), a receptor or receptor domain that binds an immobilized ligand (or vice versa), protein A or a derivative thereof (e.g., Z) that binds immobilized IgG, synthetic binding peptides (see, e.g., U.S. 5,491,074), maltose-binding protein (MBP) that binds immobilized amylose, an albumin-binding protein that binds immobilized albumin, a chitin binding domain that binds immobilized chitin, a calmodulin binding peptide that binds immobilized calmodulin, and a cellulose binding domain that binds immobilized cellulose. Another exemplary tag that can be used to couple/ orient the enzyme to the surface is a SNAP-tag, commercially available from Covalys (www(dot)covalys(dot) com). The SNAP-tag is an approximately 20 kDa version of a protein $O^6$-alkylguanine-DNA alkyltransferase which has a single reactive cysteine with a very high affinity for guanines alkylated at the $O^6$-position. The alkyl group - including any immobilization moiety attached to the alkyl group (e.g., a surface-immobilized alkyl group) - is transferred covalently from the guanine to the cysteine in the alkyltransferase protein.

One or more specific protease recognition sites are optionally included in a coupling domain, for example, between adjacent tags or between a tag and the enzyme. Example specific proteases include, but are not limited to, thrombin, enterokinase, factor Xa, TEV protease, and HRV 3C protease. Similarly, an intein sequence can be incorporated into a coupling domain (e.g., an intein that undergoes specific self cleavage in the presence of free thiols). Such protease cleavage sites and/or inteins are optionally used to remove a tag used for purification of the enzyme and/or for releasing the enzyme from the surface.

Large Coupling Domains

In one aspect, the coupling domain is relatively large, e.g., at least 5 kDa in size. These large domains can be added to the protein recombinantly (e.g., as in-frame fusions) or post-translationally (e.g., chemically). The relatively large size of the domain insulates the active site of the enzyme from surface effects, e.g., helping to prevent denaturation of the enzyme on the surface. The surface coupling domain can be e.g., at least 5 kDa, at least 10 kDa, at least 20 kDa, at least 50 kDa, at least 100 kDa, at least 1000 kDa or larger in size. These large coupling domains can include any of those listed herein and optionally can include one or more additional sequences. For example, the domains can include a large polypeptide sequence. The polypeptide sequence can, but does not necessarily, include coupling elements, e.g., fused to the large polypeptide sequence. Thus, for example, a large extraneous surface insulating polypeptide sequence can be fused in frame to the enzyme sequence and a coupling element such as a poly-His sequence. The large coupling domain can also include two or more separate surface coupling elements, e.g., a poly-His sequence and a GST sequence, e.g., in addition to a large polypeptide sequence that insulates enzymatic domains from the surface.

Examples of large coupling domains can include, e.g., one or more polypeptide sequence. For example, a sequence that is inactive relative to the enzyme of interest (e.g., has little or no effect on enzymatic activity) can be used. Such sequences include polypeptide chains of known polypeptides, random sequences, or sequences selected by the user. Sequences that are likely to disrupt folding of the enzyme are typically avoided, e.g., the large coupling domain is typically selected to avoid charged or reactive residues proximal to the enzyme domain of a fusion protein (though the large domain can present charged or reactive residues distal to the enzyme, e.g., to interact with the surface or binding partner). The large coupling domain optionally includes a polypeptide sequence that improves solubility of the coupling domain-enzyme fusion protein, for example, MBP, thioredoxin, or NusA (N utilization substance A).

The large coupling domain can fold upon translation into a defined structure, e.g., as a protein or protein domain. A wide variety of structurally discrete domains are known in the literature and can be used as large coupling domains. The NCBI, GeneBank and others provide extensive lists of known polypeptide sequences that can be used, in whole or in part, as large coupling domains. Furthermore, random sequences, or sequences designed by the user to have appropriate properties (e.g., by including coupling elements, charged features proximal to oppositely charged surface features, regions of secondary structure such as helixes, turns, hydrophobic or hydrophilic domains, etc.) can be used. These structures can be partially or fully denatured upon binding to the surface, insulating or "cushioning" the active enzyme from the surface.

Fusion Proteins

The recombinant construction of fusion proteins is generally well known and can be applied to the present invention to incorporate coupling domains or elements. In brief, a nucleic acid that encodes the coupling domain or element is fused in frame to a nucleic acid encoding the enzyme of interest. The resulting fusion nucleic acid is expressed (in vitro or in vivo) and the expressed fusion protein is isolated, e.g., by standard methods and/or by binding coupling elements, e.g., comprising purification tags, to surfaces. Coupling domains or elements are typically fused N-terminal and/or C-terminal to the enzyme, but are optionally internal to the enzyme (e.g., incorporated into a surface loop or the like) where such incorporation does not interfere with function of the enzyme or domain).

References that discuss recombinant methods that can be used to construct fusion nucleic acids and to create fusion proteins include Sambrook et al., Molecular Cloning - A Laboratory Manual (3rd Ed.), Vol. 1-3, Cold Spring Harbor Laboratory, Cold Spring Harbor, New York, 2000 ("Sambrook"); Current Protocols in Molecular Biology). F.M. Ausubel et al., eds., Current Protocols, a joint venture between Greene Publishing Associates, Inc. and John Wiley & Sons, Inc., (supplemented through 2005) ("Ausubel")) and PCR Protocols A Guide to Methods and Applications (Innis et al. eds) Academic Press Inc. San Diego, CA (1990) (Innis).

In addition, a plethora of kits are commercially available for cloning, recombinant expression and purification of plasmids or other relevant nucleic acids from cells, (see, e.g., EasyPrep™, FlexiPrep™, both from Pharmacia Biotech; StrataClean™, from Stratagene; and, QIAprep™ from Qiagen). Any isolated and/or purified nucleic acid can be further manipulated to produce other nucleic acids, used to transfect cells, incorporated into related vectors to infect organisms for expression, and/or the like. Typical cloning vectors contain transcription and translation terminators, transcription and translation initiation sequences, and promoters useful for regulation of the expression of the particular target nucleic acid. The vectors optionally comprise generic expression cassettes containing at least one independent terminator sequence, sequences permitting replication of the cassette in eukaryotes, or prokaryotes, or both, (e.g., shuttle vectors) and selection markers for both prokaryotic and eukaryotic systems. Vectors are suitable for replication and integration in prokaryotes, eukaryotes, or both. *See,* Giliman & Smith, Gene 8:81 (1979); Roberts, et al., Nature, 328:731 (1987); Schneider, B., et al., Protein Expr. Purif. 6435:10 (1995); Ausubel, Sambrook, Berger (*above*). A catalogue of Bacteria and Bacteriophages useful for cloning is provided, e.g., by the ATCC, e.g., *The ATCC Catalogue of Bacteria and Bacteriophage* published yearly by the ATCC. Additional basic procedures for sequencing, cloning and other aspects of molecular biology and underlying theoretical considerations are also found in Watson et al. (1992) Recombinant DNA Second Edition, Scientific American Books, NY.

Other useful references, e.g. for cell isolation and culture (e.g., for subsequent nucleic acid isolation and fusion protein (e.g., enzyme) expression) include Freshney (1994) Culture of Animal Cells, a Manual of Basic Technique, third edition, Wiley- Liss, New York and the references cited therein; Payne et al. (1992) Plant Cell and Tissue Culture in Liquid Systems John Wiley & Sons, Inc. New York, NY; Gamborg and Phillips (eds) (1995) Plant Cell, Tissue and Organ Culture; Fundamental Methods Springer Lab Manual, Springer-Verlag (Berlin Heidelberg New York) and Atlas and Parks (eds) The Handbook of Microbiological Media (1993) CRC Press, Boca Raton, FL.

In addition, essentially any fusion nucleic acid can be custom or standard ordered from any of a variety of commercial sources, such as Operon Technologies Inc. (Alameda, CA).

A variety of protein isolation and detection methods are known and can be used to isolate enzymes, e.g., from recombinant cultures of cells expressing fusion protein enzymes of the invention. A variety of protein isolation and detection methods are well known in the art, including, e.g., those set forth in R. Scopes, Protein Purification, Springer-Verlag, N.Y. (1982); Deutscher, Methods in Enzymology Vol. 182: Guide to Protein Purification, Academic Press, Inc. N.Y. (1990); Sandana (1997) Bioseparation of Proteins, Academic Press, Inc.; Bollag et al. (1996) Protein Methods, 2nd Edition Wiley-Liss, NY; Walker (1996) The Protein Protocols Handbook Humana Press, NJ, Harris and Angal (1990) Protein Purification Applications: A Practical Approach IRL Press at Oxford, Oxford, England; Harris and Angal Protein Purification Methods: A Practical Approach IRL Press at Oxford, Oxford, England; Scopes (1993) Protein Purification: Principles and Practice 3rd Edition Springer Verlag, NY; Janson and Ryden (1998) Protein Purification: Principles, High Resolution Methods and Applications, Second Edition Wiley-VCH, NY; Walker (2002) Protein Protocols on CD-ROM, version 2.0 Humana Press, NJ;

Current Protocols in Protein Science, John E. Coligan et al., eds., Current Protocols, a joint venture between Greene Publishing Associates, Inc. and John Wiley & Sons, Inc., (supplemented through 2005); and the references cited therein. Additional details regarding protein purification and detection methods can be found in Satinder Ahuja ed., Handbook of Bioseparations, Academic Press (2000).

Adding Coupling Domains Chemically

In addition to the convenient recombinant expression of fusion proteins comprising coupling domains, the coupling domains can also alternatively or additionally be coupled to the enzyme (or particle) chemically. For example, N, S or O containing residues of the enzyme (or added recombinantly to the enzyme) can be coupled through standard chemical methods to coupling domains that comprise groups that bind these residues.

In addition, systems of orthogonal components are available that can incorporate any of a variety of chemically reactive unnatural amino acids into a recombinant protein. In brief, a cell or other translation system is constructed that includes an orthogonal tRNA ("OtRNA"; a tRNA not recognized by the cell's endogenous translation machinery, such as an amber or 4-base tRNA) and an orthogonal tRNA synthetase ("ORS"; this is a synthetase that does not aminoacylate any endogenous tRNA of the cell, but which can aminoacylate the OtRNA in response to a selector codon). A nucleic acid encoding the enzyme is constructed to include a selector codon at a selected that is specifically recognized by the OtRNA. The ORS specifically incorporates an unnatural amino acid with a desired chemical functionality at one or more selected site(s) (e.g., distal to the active site). This chemical functional group can be unique as compared to those ordinarily found on amino acids, e.g., that incorporate keto or other functionalities. These are coupled to the coupling domains through appropriate chemical linkages.

Further information on orthogonal systems can be found, e.g., in Wang et al., (2001), Science 292: 498-500; Chin et al., (2002) Journal of the American Chemical Society 124:9026-9027; Chin and Schultz, (2002), ChemBioChem 11:1135-1137; Chin, et al., (2002), PNAS United States of America 99: 11020-11024; and Wang and Schultz, (2002), Chem. Comm., 1-10. See also, International Publications WO 2002/086075, entitled "METHODS AND COMPOSITIONS FOR THE PRODUCTION OF ORTHOGONAL tRNA AMINOACYL-tRNA SYNTHETASE PAIRS;" WO 2002/085923, entitled "IN VIVO INCORPORATION OF UNNATURAL AMINO ACIDS;" WO 2004/094593, entitled "EXPANDING THE EUKARYOTIC GENETIC CODE;" WO 2005/019415, filed July 7, 2004; WO 2005/007870, filed July 7, 2004; and WO 2005/007624, filed July 7, 2004.Orientation Properties

Orientation Properties

Preferably, the artificial surface coupling domains are distal to an active site of the enzyme, and more preferably, distal in the context of the 3-dimensional structure of the enzyme. By "distal to an active site", in the context of the present invention, is meant a position in the enzyme structure that is closer to a particular point in the space occupied by the enzyme (e.g., 3-dimensional space) than it is to an average location of the active site of the enzyme, where the 'particular point' is the point in the enzyme structure that is furthest from the average location of the active site. Without being bound to any particular theory of operation, it is believed that this tends to orient the enzyme active site away from the surface, making it accessible to enzyme substrates, and avoiding surface effects on the active site region of the enzyme. For example, when the active site is located toward the C-terminal domain of the enzyme, the artificial surface coupling domain will generally be located more toward the N-terminal domain of the enzyme, or vice versa. Of course, in preferred aspects, the relative positioning of the artificial surface coupling domain to the active site is defined in the context of the 3-dimensional structure of the enzyme, which may or may not positionally map to the primary structure of the enzyme, e.g., both active site and coupling domain may be within the C terminal region in the primary structure of the protein, but still be distal from each other when examined with respect to the secondary or tertiary structure of the protein. Enzyme orientation can be fixed relative to the surface through the use of multiple surface binding domains or elements, by inhibiting enzyme rotation around surface coupling bonds. The use of multiple surface domains also increases binding affinity of the enzyme for a surface; for example, two surface coupling domains can have a higher binding affinity than binding of the enzyme to the surface through a single surface coupling domain (e.g., where the surface coupling domains have additive or synergistic effects on the overall binding affinity of the enzyme for the surface). The use of multiple domains can also facilitate purification and/ or control release of the enzyme from a surface, by providing multiple different release mechanisms (e.g., coordinating metals from a nickel NTA binding domain in a first step, followed by other different release mechanisms such as heat, light, salt concentration, acid, base, site-specific protease treatment, binding competition, etc., in a second controlled release step, depending on the nature of the additional coupling domains). The use of multiple coupling domains can also serve to orient the active site towards and/or in the vicinity of the metallic particle, facilitating the increase in radiative rate of a fluorescent product of the enzyme reaction.

Controllable Coupling

In many surface-bound applications, it is useful to control coupling of the surface coupling domain and any binding partner that binds to the coupling domain. Similar approaches apply to selective coupling of the metal particle.

For example, standard chip masking strategies can be used to selectively block or expose surface bound binding partners for the enzyme or particle to one or more un-blocking action (exposure to light, heat, chemicals, pH, protein blocking agents, etc.). The coupling domain can similarly be blocked until it is desirable to couple it to the binding partner. This blocking/ unblocking approach can be used to create complex arrays of proteins (e.g., enzymes) coupled to the surface. This is useful in array-based applications, e.g., where the activity of the enzyme is monitored at selected sites on the array, e.g., using standard or custom array detectors.

Thus, coupling of the surface coupling domain to the surface is optionally controlled by caging the surface coupling domain and/or its binding partner. The surface coupling domain or its partner can be caged, for example, by attachment of at least one photolabile caging group to the domain or partner; the presence of the caging group prevents the interaction of the surface coupling domain with its binding partner, while removal of the caging group by exposure to light of an appropriate wavelength permits the interaction to occur. The photolabile caging group can be, e.g., a relatively small moiety such as carboxyl nitrobenzyl, 2-nitrobenzyl, nitroindoline, hydroxyphenacyl, DMNPE, or the like, or it can be, e.g., a relatively bulky group (e.g. a macromolecule, a protein) covalently attached to the molecule by a photolabile linker (e.g., a polypeptide linker comprising a 2-nitrophenyl glycine residue). Other caging groups can be removed from a molecule, or their interference with the molecule's activity can be otherwise reversed or reduced, by exposure to an appropriate type of uncaging energy and/or exposure to an uncaging chemical, enzyme, or the like.

A large number of caging groups, and a number of reactive compounds that can be used to covalently attach caging groups to other molecules, are well known in the art. Examples of photolabile caging groups include, but are not limited to: nitroindolines; N-acyl-7-nitroindolines; phenacyls; hydroxyphenacyl; brominated 7-hydroxycoumarin-4-ylmethyls (e.g., Bhc); benzoin esters; dimethoxybenzoin; meta-phenols; 2-nitrobenzyl; 1-(4,5-dimethoxy-2-nitrophenyl)ethyl (DMNPE); 4,5-dimethoxy-2-nitrobenzyl (DMNB); alpha-carboxy-2-nitrobenzyl (CNB); 1-(2-nitrophenyl)ethyl (NPE); 5-carboxymethoxy-2-nitrobenzyl (CMNB); (5-carboxymethoxy-2-nitrobenzyl)oxy) carbonyl; (4,5-dimethoxy-2-nitrobenzyl)oxy) carbonyl; desoxybenzoinyl; and the like. *See*, e.g., USPN 5,635,608 to Haugland and Gee (June 3, 1997) entitled "α-carboxy caged compounds"; Neuro 19,465 (1997); J Physiol 508.3, 801 (1998); Proc Natl Acad Sci USA 1988 Sep, 85(17): 6571-5; J Biol Chem 1997 Feb 14, 272(7): 4172-8; Neuron 20, 619-624, 1998; Nature Genetics, vol. 28:2001:317-325; Nature, vol. 392,1998:936-941; Pan, P., and Bayley, H. "Caged cysteine and thiophosphoryl peptides" FEBS Letters 405:81-85 (1997); Pettit et al.

(1997) "Chemical two-photon uncaging: a novel approach to mapping glutamate receptors" Neuron 19: 465-471; Furuta et al. (1999) "Brominated 7-hydroxycoumarin-4-ylmethyls: novel photolabile protecting groups with biologically useful cross-sections for two photon photolysis" Proc. Natl. Acad. Sci. 96(4):1193-1200; Zou et al. "Catalytic subunit of protein kinase A caged at the activating phosphothreonine" J. Amer. Chem. Soc. (2002) 124:8220-8229; Zou et al. "Caged Thiophosphotyrosine Peptides" Angew. Chem. Int. Ed. (2001) 40: 3049-3051; Conrad II et al. "p-Hydroxyphenacyl Phototriggers: The reactive Excited State of Phosphate Photorelease" J. Am. Chem. Soc. (2000) 122:9346-9347; Conrad II et al. "New Phototriggers 10: Extending the π, π* Absorption to Release Peptides in Biological Media" Org. Lett. (2000) 2:1545-1547; Givens et al. "A New Phototriggers 9: p-Hydroxyphenacyl as a C-Terminus Photoremovable Protecting Group for Oligopeptides" J. Am. Chem. Soc. (2000) 122:2687-2697; Bishop et al. "40-Aminomethyl-2,20-bipyridyl-4-carboxylic Acid (Abc) and Related Derivatives: Novel Bipyridine Amino Acids for the Solid-Phase Incorporation of a Metal Coordination Site Within a Peptide Backbone" Tetrahedron (2000) 56: 4629-4638; Ching et al. "Polymers As Surface-Based Tethers with Photolytic triggers Enabling Laser-Induced Release/Desorption of Covalently Bound Molecules" Bioconjugate Chemistry (1996) 7:525-8; BioProbes Handbook, 2002 from Molecular Probes, Inc.; and Handbook of Fluorescent Probes and Research Products, Ninth Edition or Web Edition, from Molecular Probes, Inc, as well as the references below.

Caged enzymes or particles (e.g., comprising caged surface coupling domains and/or binding partners) can be produced, e.g., by reacting an enzyme polypeptide or particle with a caging compound or, in the case of enzymes, by incorporating a caged amino acid during synthesis of a polypeptide. *See*, e.g., USPN 5,998,580 to Fay et al. (December 7, 1999) entitled "Photosensitive caged macromolecules"; Kossel et al. (2001) PNAS 98: 14702-14707; Trends Plant Sci (1999) 4:330-334; PNAS (1998) 95:1568-1573; J Am Chem Soc (2002) 124: 8220-8229; Pharmacology & Therapeutics (2001) 91: 85-92; and Angew Chem Int Ed Engl (2001) 40: 3049-3051. A polypeptide can be reacted with a caged biotin (see, e.g., Pirrung and Huang (1996) "A general method for the spatially defined immobilization of biomolecules on glass surfaces using 'caged' biotin" Bioconjug Chem. 7:317-21). As another example, a photolabile polypeptide linker (e.g., comprising a photolabile amino acid such as that described in USPN 5,998,580, *supra*) can be used to link a bulky caging group (e.g., another polypeptide that blocks the interaction between the surface coupling domain and its binding partner) to the surface coupling domain or partner.

Useful site(s) of attachment of caging groups to a given molecule can be determined by techniques known in the art. For example, a surface coupling domain can be reacted with a caging compound. The resulting caged surface coupling domain can then be tested to determine if its interaction with its binding partner is sufficiently blocked. As another example, for a polypeptide surface coupling domain, amino acid residues located at the surface coupling domain-partner binding interface can be identified by routine techniques such as scanning mutagenesis, sequence comparisons and site-directed mutagenesis, or the like. Such residues in the coupling domain can then be caged, and the activity of the caged surface coupling domain can be assayed to determine the efficacy of caging.

Appropriate methods for uncaging caged molecules are also known in the art. For example, appropriate wavelengths of light for removing many photolabile groups have been described; e.g., 300-360 nm for 2-nitrobenzyl, 350 nm for benzoin esters, and 740 nm for brominated 7-hydroxycoumarin-4-ylmethyls (*see*, e.g., references herein). Conditions for uncaging any caged molecule (e.g., the optimal wavelength for removing a photolabile caging group) can be determined according to methods well known in the art. Instrumentation and devices for delivering uncaging light are likewise known; for example, well-known and useful light sources include e.g., a lamp or a laser.

SURFACES AND BINDING PARTNERS

The surfaces of the invention to which enzymes (or particles) are bound can present a solid or semi-solid surface for any of a variety of linking chemistries that permit coupling of the enzyme or particle to the surface. The specific binding surface coupling chemistries can be any of those noted herein. Note that in some applications, the particle constitutes the relevant surface for linking (e.g., where the enzyme is bound to it), while in other aspects, the particle can be bound to an additional surface.

A wide variety of organic and inorganic materials, both natural and synthetic can be employed as the material for the surface. Illustrative organic materials include, e.g., polymers such as polyethylene, polypropylene, poly(4-methylbutene), polystyrene, polymethylmethacrylate (PMMA), poly(ethylene terephthalate), rayon, nylon, poly(vinyl butyrate), polyvinylidene difluoride (PVDF), silicones, polyformaldehyde, cellulose, cellulose acetate, nitrocellulose, and the like. Other materials that may be employed as the surfaces or components thereof, include papers, ceramics, glass, metals, metalloids, semiconductive materials, cements, or the like. Glass represents one preferred embodiment. In addition, substances that form gels, such as proteins (e.g., gelatins), lipopolysaccharides, silicates, and agarose are also optionally used, or can be used as coatings on other (rigid, e.g., glass) surfaces.

In several embodiments, the solid surface is a planar, substantially planar, or curved surface such as an array chip, a wall of an enzymatic reaction vessel such as a sequencing or amplification chamber, a ZMW or the like.

A wide variety of linking chemistries are available for linking molecules to a wide variety of solid or semi-solid surfaces. It is impractical and unnecessary to describe all of the possible known linking chemistries for linking molecules to a solid support (including particles to an additional support). It is expected that one of skill can easily select appropriate chemistries, depending on the intended application.

In one preferred embodiment, the surfaces of the invention comprise silicate elements (e.g., glass or silicate surfaces). A variety of silicon-based molecules appropriate for functionalizing such surfaces are commercially available. See, for example, Silicon Compounds Registry and Review, United Chemical Technologies, Bristol, PA. Additionally, the art in this area is very well developed and those of skill will be able to choose an appropriate molecule for a given purpose. Appropriate molecules can be purchased commercially, synthesized de novo, or can be formed by modifying an available molecule to produce one having the desired structure and/or characteristics.

A binding partner that binds to an enzyme or particle, or coupling group on the enzyme or particle, attaches to the relevant solid substrate through any of a variety of chemical bonds. For example, the linker is optionally attached to the solid substrate using carbon-carbon bonds, for example via substrates having (poly)trifluorochloroethylene surfaces, or siloxane bonds (using, for example, glass or silicon oxide as the solid substrate). Siloxane bonds with the surface of the substrate are formed in one embodiment via reactions of derivatization reagents bearing trichlorosilyl or trialkoxysilyl groups. The particular linking group is selected based upon, e.g., its hydrophilic/hydrophobic properties where presentation of the binding partner in solution is desirable. Groups which are suitable for attachment to a linking group include amine, hydroxyl, thiol, carboxylic acid, ester, amide, isocyanate and isothiocyanate. Preferred derivatizing groups include aminoalkyltrialkoxysi lanes, hydroxyalkyltrialkoxysilanes, polyethyleneglycols, polyethyleneimine, polyacrylamide, polyvinylalcohol and combinations thereof.

The molecules that can be attached to a derivitized surface by these methods include particles, e.g., metallic particles, peptides, nucleic acids, mimetics, large and small organic molecules, polymers and the like. Amino acids that are coupled can be either those having a structure which occurs naturally or they can be of unnatural structure (i.e., synthetic or unnatural, e.g., produced in a system of orthogonal components as noted above). Useful naturally occurring amino acids for coupling include, arginine, lysine, aspartic acid and glutamic acid. Surfaces that bind combinations of these amino acids are also of use in the present invention. Further, peptides comprising one or more residues having a charged or potentially charged side chain are useful binding partner components; these can be synthesized utilizing arginine, lysine, aspartic acid, glutamic acid and combinations thereof. Useful unnatural amino acids are commercially available or can be synthesized utilizing art-recognized methods. In those embodiments in which an amino acid moiety having an acidic or basic side chain is used, these moieties can be attached to a surface bearing a reactive group through standard peptide synthesis methodologies or easily accessible variations thereof. See, for example, Jones (1992), Amino Acid and Peptide Synthesis, Oxford University Press, Oxford.

Linking groups can also be incorporated into the enzymes, binding partners or particles/surfaces of the invention. Linking groups of use in the present invention can have any of a range of structures, substituents and substitution patterns. They can, for example, be derivitized with nitrogen, oxygen and/or sulfur containing groups which are pendent from, or integral to, the linker group backbone. Examples include, polyethers, polyacids (polyacrylic acid, polylactic acid), polyols (e.g., glycerol), polyamines (e.g., spermine, spermidine) and molecules having more than one nitrogen, oxygen and/or sulfur moiety (e.g., 1,3-diamino-2-propanol, taurine). See, for example, Sandler et al. (1983) Organic Functional Group Preparations 2nd Ed., Academic Press, Inc. San Diego. A wide range of mono-, di- and bis-functionalized poly(ethyleneglycol) molecules are commercially available and will prove generally useful in this aspect of the invention. See, for example, 1997-1998 Catalog, Shearwater Polymers, Inc., Huntsville, Alabama. Additionally, there are a number of easily practiced, useful modification strategies that can be applied to making linkers. See, for example, Harris, (1985) Rev. Macromol. Chem. Phys., C25(3), 325-373; Zalipsky et al., (1983) Eur. Polym. J., 19(12), 1177-1183; U.S. Patent No. 5,122,614, issued June 16,1992 to Zalipsky; U.S. Patent No. 5,650,234, issued to Dolence et al. July 22, 1997, and references therein.

In a preferred embodiment of the invention, the coupling chemistries for coupling moieties to the surfaces of the invention are light-controllable, i.e., utilize photoreactive chemistries. The use of photo-reactive chemistries and masking strategies to activate binding partner coupling to surfaces, as well as other photo-reactive chemistries is generally known (e.g., for semi-conductor chip fabrication and for coupling bio-polymers to solid phase materials). The use of photo-cleavable protecting groups and photo-masking permits type switching of both mobile and fixed array members, i.e., by altering the presence of substrates present on the array members (i.e., in response to light). Among a wide variety of protecting groups which are useful are nitroveratryl (NVOC) - methylnitroveratryl (Menvoc), allyloxycarbonyl (ALLOC), fluorenylmethoxycarbonyl (FMOC), -methylnitro-piperonyloxycarbonyl (MeNPOC), -NH-FMOC groups, t-butyl esters, t-butyl ethers, and the like. Various exemplary protecting groups (including both photo-cleavable and non-photo-cleavable groups) are described in, for example, Atherton et al., (1989) Solid Phase Peptide Synthesis, IRL Press, and Greene, et al. (1991) Protective Groups In Organic Chemistry, 2nd Ed., John Wiley & Sons, New York, NY, as well as, e.g., Fodor et al. (1991) Science, 251: 767- 777, Wang (1976) J. Org. Chem. 41: 3258; and Rich, et al. (1975) J. Am. Chem. Soc. 97: 1575-1579.

Layout of Enzymes and Particles

Enzymes and metallic particles bound to solid surfaces as described above can be formatted into sets/libraries of components. The precise physical layout of these libraries is at the discretion of the practitioner. One can conveniently utilize gridded arrays of library members (e.g., individual bound enzymes and proximal particles, or blocks of enzyme and/or particle types bound at fixed locations), e.g., on a glass or polymer surface, or formatted in a microtiter dish or other reaction vessel, or even dried on a substrate such as a membrane. However, other layout arrangements are also appropriate, including those in which the library members are stored in separate locations that are accessed by one or more access control elements (e.g., that comprise a database of library member locations). The library format can be accessible by conventional robotics or microfluidic devices, or a combination thereof.

One common array format for use is a microtiter plate array, in which the library comprises an array embodied in the wells of a microtiter tray (or the components therein). The surfaces of the microtiter tray, or of beads located in the microtiter tray provide two convenient implementations of libraries of surface-bound enzymes. Such trays are commercially available and can be ordered in a variety of well sizes and numbers of wells per tray, as well as with any of a variety of functionalized surfaces for binding of binding partners. Common trays include the ubiquitous 96 well plate, with 384 and 1536 well plates also in common use.

In addition to libraries that comprise liquid phase components, the libraries can also simply comprise solid phase arrays of enzymes/ particles (e.g., that can have liquid phase reagents added to them during operation). These arrays fix enzymes and particles in a spatially accessible pattern (e.g., a grid of rows and columns) onto a solid substrate such as a membrane (e.g., nylon or nitrocellulose), a polymer or ceramic surface, a glass or modified silica surface, a metal surface, or the like. The libraries can also be formatted on a ZMW.

While component libraries are most often thought of as physical elements with a specified spatial-physical relationship, the present invention can also make use of "logical" libraries, which do not have a straightforward spatial organization. For example, a computer system can be used to track the location of one or several components of interest which are located in or on physically disparate components. The computer system creates a logical library by providing a "look-up" table of the physical location of array members (e.g., using a commercially available inventory tracking system). Thus, even components in motion can be part of a logical library, as long as the members of the library can be specified and located.

Single Molecule Detection

The detection of an activity of a single molecule of an enzyme, or of a few proximal molecules, facilitated by the present invention, has a number of applications. For example, single molecule detection in sequencing applications can be used to dramatically reduce reagent consumption and to increase sequencing throughput. Detection of single molecule activity or of low numbers of molecules can similarly be used to reduce reagent consumption in other enzymatic assays.

In one example reaction of interest, a polymerase reaction can be isolated within an extremely small observation volume that effectively results in observation of individual polymerase molecules. As a result, the incorporation event provides observation of an incorporating nucleotide analog that is readily distinguishable from non-incorporated nucleotide analogs. In a preferred aspect, such small observation volumes are provided by immobilizing the polymerase enzyme within an optical confinement, such as a Zero Mode Waveguide (ZMW). For a description of ZMWs and their application in single molecule analyses, and particularly nucleic acid sequencing, see, e.g., Levene et al., Zero-mode waveguides for single-molecule analysis at high concentrations, Science 299:682-686 (2003), Published U.S. Patent Application No. 2003/0044781, and U.S. Patent No. 6,917,726.

In one aspect, the polymerase itself includes a label, e.g., a fluorescent label. Such a label is optionally used to track the position of the enzyme in a ZMW or other device. The label can be attached to the enzyme by any of a number of techniques known in the art, essentially as described above in the context of coupling domains/binding partners; as just one example, an enzyme including a SNAP-tag can be labeled with a fluorophore by reaction with SNAP-vitro 488 or a similar compound (see, e.g., www(dot)covalys(dot)com).

KITS COMPRISING ENZYME/PARTICLES ON SURFACES

Kits of the invention can take any of several different forms. For example, the surface bound enzymes and/or particles can be provided as components of the kits, or the surface can be provided with binding partners suitable to bind the enzymes or particles, which are optionally packaged separately: The kits can include packaging materials suitable to the application, e.g., with the enzymes and particles of the invention packaged in a fashion to enable use of the enzymes. Regents that are relevant to enzyme function are optionally included as components of the kit, e.g., enzyme substrates (e.g., labeled with fluorophores), reaction buffers, or the like. Instructions for making or using surface bound enzymes/particles are an optional feature of the invention.

MULTI-LABELED NUCLEOTIDES

The present invention provides increased signal from nucleotides by providing multiple detectable labels on individual nucleotides. These nucleotides are referred to as "multi-labeled nucleotides." This is particularly useful for single molecule detection, where optimization of the signal detection limit of a nucleotide label is desirable.

For example, nucleic acid sequencing reactions have been performed in which release of a label from a labeled nucleotide upon incorporation of the nucleotide into a nucleic acid polymer by a template-dependent polymerase is monitored, providing a mechanism for sequencing a nucleic acid template. Examples of appropriate nucleotides and enzymes that will incorporate them are found, e.g., in Hanzel et al. "POLYMERASES FOR NUCLEOTIDE ANALOGUE INCORPORATION" PCT/US2006/449122 and in U.S. Patent Application No. 11/241,809, filed September 29, 2005.

In the present invention, the labeling groups incorporated into the analogs comprise fluorescent moieties, with fluorescent and/or fluorogenic labels being preferred. Any of a variety of different label moieties are readily employed in nucleotide analogs. Such groups include fluorescein labels, rhodamine labels, cyanine labels (i.e., Cy3, Cy5, and the like, generally available from the Amersham Biosciences division of GE Healthcare), the Alexa family of fluorescent dyes and other fluorescent and fluorogenic dyes available from Molecular Probes/Invitrogen, Inc., and described in 'The Handbook - A Guide to Fluorescent Probes and Labeling Technologies, Tenth Edition' (2005) (available from Invitrogen, Inc./Molecular Probes). A variety of other fluorescent and fluorogenic labels for use with nucleoside polyphosphates, and which would be applicable to the nucleotide analogues of the present invention are described in, e.g., Published U.S. Patent Application No. 2003/0124576.

One preferred class of nucleotides includes 4 or more phosphate groups, one or more of which is labeled with one or more labels. Thus, in one illustrative example, the nucleotide analogue can be a phosphate analog (e.g., an analogue that has more than the typical number of phosphates found in nucleoside triphosphates) that includes, e.g., one or more dye label. In certain embodiments, the phosphate analog includes two or more labels on one or more of the extra phosphates of the analog, e.g., coupled to the phosphate(s) through one or more linkers.

Additional details regarding phosphate analogues and methods of making such analogues can be found in U.S. Patent Application No. 11/241,809, filed September 29, 2005. These analogs can be adapted to the present invention by including more than one detectable label in the nucleotide at issue.

For purposes of the present invention, a single FRET pair is not considered to include two detectable labels. That is, because FRET requires two or more label moieties to detect energy transfer, the pair in combination essentially comprises a single detectable label system. Thus, a nucleotide that comprises a single FRET pair does not comprise two or more detectable labels as intended herein. Instead, a nucleotide of the invention will include two or more labels that are each detectable, such as two or more fluorophore moieties that simultaneously fluoresce when exposed to an appropriate excitation light source. Each fluorophore emits a detectable signal and the photon flux from the combination of labels is greater than the photon flux from a single label. In certain preferred embodiments, the two or more labels are comprise the same fluorescent moiety, which acts to amplify the overall emission signal from the nucleotide. However, different fluorophores can be used to generate composite signals, providing, e.g., for differentiation of different nucleotides in a single sample.

While as few as two labels are useful to amplify signal, in certain embodiments, 3, 4, 5, 6, 7, 8, 9, 10 or more labels are incorporated into the relevant nucleotide, thereby further amplifying the signal. The labels can be located on the same component of the nucleotide (e.g., each connected to a base, phosphate, or sugar moiety, e.g., through a linker) or can be on separate components of the nucleotide (e.g., one or more base-linked fluorophore combined with one or more phosphate linked fluorophore). The labels can be placed on non-natural components of the nucleotide, e.g., a delta phosphate. When the label is coupled to the nucleotide by a linker, the linker can be rigid, semi-rigid, or non-rigid. A variety of linker chemistries for linking a label to a nucleotide are described, e.g., in Hanzel et al. "POLYMERASES FOR NUCLEOTIDE ANALOGUE INCORPORATION" PCT/US2006/049122 and in U.S. Patent Application No. 11/241,809, filed September 29, 2005.

Any available format for a single molecule (or other low copy number) reaction can be used with the multi-labeled nucleotides herein. One example format utilizes a "zero mode waveguide" (ZMW) for analysis of low copy number molecules. For a description of ZMWs and their applications in single molecule analyses, and particularly nucleic acid sequencing, see, e.g., Published U.S. Patent Application No. 2003/0044781, and U.S. Patent No. 6,917,726.

Compositions That Include Multi-Labeled Nucleotides

Compositions of the invention can include the labeled nucleotide in combination with any other components relevant to the assay that the nucleotide label is to be detected in. For example, compositions can include an enzyme capable of incorporating the nucleotide into a nucleic acid polymer, such as a polymerase, a reverse transcriptase, or a terminal transferase. The enzyme can cleave the label from the nucleotide upon incorporation, or can simply incorporate the labeled nucleotide.

Methods of detecting incorporation of a labeled nucleotide into a nucleic acid are, correspondingly, provided. In the methods, a nucleotide comprising two more detectable labels is incubated with a polymerase enzyme that incorporates the nucleotide into a nucleic acid. The enzyme cleaves the labels from the nucleotide during or upon incorporation of the nucleotide into the nucleic acid, thereby producing a detectable signal, but accumulation of signal in the nucleic acid can also be measured, e.g., in sequencing by incorporation methods. The detectable signal produced by action of the enzyme on the nucleotide is detected.

Most typically, this provides sequence information for a template nucleic acid. For example, the enzyme can be a template-dependent polymerase and the method can include correlating the detectable signal with a position of a nucleotide of a template nucleic acid, thereby providing sequence information for the template nucleic acid.

For a review of polymerases useful in such methods, see, e.g., Hübscher et al. (2002) EUKARYOTIC DNA POLYMERASES Annual Review of Biochemistry Vol. 71: 133-163; Alba (2001) "Protein Family Review: Replicative DNA Polymerases" Genome Biology 2 (1): reviews 3002.1-3002.4; Steitz (1999) "DNA polymerases: structural diversity and common mechanisms" J Biol Chem 274:17395-17398 and Burgers et al. (2001) "Eukaryotic DNA polymerases: proposal for a revised nomenclature" J Biol Chem. 276(47): 43487-90. Any of a variety of reactions can utilize the multi-labeled nucleotides of the invention; see, e.g., Giller et al. (2003) "Incorporation of reporter molecule-labeled nucleotides by DNA polymerases. I. Chemical synthesis of various reporter group-labeled 2'-deoxyribonucleoside-5'-triphosphates" Nucleic Acids Res. 31(10): 2630-2635; Augustin et al. (2001) "Progress towards single-molecule sequencing: enzymatic synthesis of nucleotide-specifically labeled DNA" J. Biotechnol., 86:289-301; Tonon et al. (2000) "Spectral karyotyping combined with locus-specific FISH simultaneously defines genes and chromosomes involved in chromosomal translocations" Genes Chromosom. Cancer 27:418-423; Zhu and Waggoner (1997) "Molecular mechanism controlling the incorporation of fluorescent nucleotides into DNA by PCR." Cytometry, 28: 206-211. Yu et al. (1994) "Cyanine dye dUTP analogs for enzymatic labeling of DNA probes" Nucleic Acids Res., 22:3226-3232; Zhu et al. (1994) "Directly labeled DNA probes using fluorescent nucleotides with different length linkers." Nucleic Acids Res. 22:3418-3422; and Ried et al. (1992) "Simultaneous visualization of seven different DNA probes by in situ hybridization using combinatorial fluorescence and digital imaging microscopy" Proc. Natl Acad. Sci. USA, 89:1388-1392.

Polymerases that are adapted to the incorporation of labeled nucleotides include those described in Hanzel et al. "POLYMERASES FOR NUCLEOTIDE ANALOGUE INCORPORATION" PCT/US2006/049122;

these include a variety of variants of existing polymerases, including DNA polymerases that are homologous to a Φ29 DNA polymerase or mutant thereof, a Taq polymerase, an exonuclease deficient Taq polymerase, a DNA Pol I polymerase, a T7 polymerase, an RB69 polymerase, a T5 polymerase, or a polymerase corresponding to a Klenow fragment of a DNA Pol I polymerase. For example, the recombinant DNA polymerase can be homologous to a wild-type or exonuclease deficient Φ29 DNA polymerase, e.g., as described in U.S. Patent Nos. 5,001,050, 5,198,543, or 5,576,204. Similarly, the recombinant DNA polymerase can be homologous to Φ29 B103, GA-1, PZA, Φ15, BS32, M2Y, Nf, G1, Cp-1, PRD1, PZE, SF5, Cp-5, Cp-7, PR4, PR5, PR722, or L17, or the like. For nomenclature, *see also*, Meijer et al. (2001) "Φ29 Family of Phages" Microbiology and Molecular Biology Reviews, 65(2): 261-287. For example, structural modifications within or proximal to the active site relative to the wild-type Φ29 DNA polymerase can include a Δ505-525 deletion, a deletion within Δ505-525, a K135A mutation, an L384R mutation, an E375H mutation, an E375S mutation, an E375K mutation, an E375R mutation, an E375A mutation, an E375Q mutation, an E375W mutation, an E375Y mutation, an E375F mutation, an E486A mutation, an E486D mutation, a K512A mutation, and combinations thereof.

## KITS THAT INCLUDE MULTI-LABELED NUCLEOTIDES

Kits that include compositions of the invention that comprise multi-labeled nucleotides, e.g., packaged for use in a sequencing assay are a feature of the invention. Such kits can include a first container containing a composition comprising the multi-labeled nucleotide, and can additionally include one or more additional vials comprising buffers, enzymes, sequencing reagents, template nucleic acids, control materials, etc., optionally in combination with instructions for use of the kit components, e.g., for nucleic acid sequencing or any other relevant method noted herein.

## OPTICAL SIGNAL DETECTION SYSTEMS

Fluorescence assays are limited by the strength (e.g., photon flux) of a fluorescence signal emission to be detected. Detection of weak signals, as occurs in low copy number analyte assays, can be difficult. In addition to increasing the strength of the signal by placement of metal particles/surfaces and the use of multiply labeled nucleotides to address this problem as discussed herein, the present invention also includes improved optical signal detection systems that optionally can be used in conjunction with such embodiments to further improve optical signal detection limits. These improved optical signal detection systems permit the use of lower levels of light from an illumination source, which has benefits in terms of signal light costs and in terms of reduced photo damage for analytes of interest, or reagents used to produce such analytes (e.g., enzymes, etc.).

In a first set of embodiments, sample illumination strategies can be used to improve signal detection, e.g., in epifluorescent mode. Light from an illumination source can be passed through a sample, and then redirected through the sample one more times using one or more reflective surfaces such as mirrors. In one simple embodiment, the effective illumination and any resulting fluorescence is increased two-fold by placing a mirror behind the sample (relative to the illumination source). Reflection of the illumination light back through the sample provides additional excitation light to the sample. In addition, the mirror also captures fluorescent emission light from the sample that is passing away from the detection optics towards the mirror, which re-directs it towards the detection optics. This can result in, e.g., a two fold increase in the amount of emitted signal that is detected. In combination, use of a mirror in this illustrative embodiment results in a four-fold increase in signal strength for a given illumination light intensity.

In addition to fluorescent signal detection, other optical signals, e.g., phosphorescence, chemiluminescence, or other signals such as absorption can similarly benefit from the use of reflectance. Further, the use of two or more tilted mirrors can be used to direct illumination light through a sample more than twice, and for capturing emitted light passing away from the detection optics in multiple different directions. For a description of related mirror geometries that can be used to direct and redirect illumination light through a sample such as on a microscope slide, see, e.g., Pinkel et al. SPECIMEN ILLUMINATION APPARATUS WITH OPTICAL CAVITY FOR DARK FIELD ILLUMINATION 5,982,534. For further information regarding capturing fluorescent emissions that are emitted away from the detection optics using reflective strategies, e.g., for improving the percentage of emission photons detected by the system see also, e.g., White et al. SIGNAL ENHANCEMENT FOR FLUORESCENCE MICROSCOPY 6,169,289.

The precise geometry of reflective surfaces such as mirrors used for redirecting light is not critical, but different geometries will have different effects. The use of curved or toroidal mirrors behind the sample can result in capturing a greater percentage of illumination and/or emission light. Similarly, different mirror materials have different reflective properties and can be selected by the user. Appropriate mirror materials include silvered glass, metal surfaces (aluminum, silver, etc.) and the like.

The use of reflectance to improve sample illumination and to capture fluorescent signals is particularly useful in the present invention for illumination of small volume sample regions that are characteristically used for single/ low copy number molecule detection. In these embodiments, the sample is analyzed in a micro or nano structure (well, chamber, channel, etc.) that has at least one dimension that is about 100 $\mu$m or smaller, typically 10$\mu$m or smaller, and often 1$\mu$m or 0.1$\mu$m or

smaller.

In brief, an example sample system includes a sample holder (e.g., microscope slide) and a sample stage (e.g., microscope stage or slide holder) configured to receive the sample holder. The sample stage includes a sample viewing region. The system also includes an illumination source and fluorescence detector configured to illuminate the sample viewing region and to detect fluorescence from a sample. In preferred embodiments, the illumination and detection optics are integrated, e.g., as typically occurs for epi-illumination and detection of optical signals. At least one reflective surface is configured to reflect illumination light that passes through the sample viewing region back through the sample viewing region at least once. This can be done with standard reflective surfaces (e.g., mirrors, dichroic mirrors), through use of total internal reflectance (achieved by angling the illumination light relative to a phase change region of the sample holder, such as a coverslip), or other available techniques. For a description of appropriate reflectance materials, see also, 5,982,534 and 6,169,289. Prisims, filters or other optical train features can be used to direct the angle of light entering the sample, and/or to limit the wavelength of light entering or exiting the sample (e.g., into the detection optics).

As discussed, the sample holder can include small sample volume regions and can also include one or more optical or sample confinement features, such as one or more ZMW, that the sample is analyzed in. Thus, the sample holder can include, e.g., a microscope slide, a microfluidic device (e.g., LABCHIP™), a device comprising one or more nanostructure(s), a ZMW, etc. The sample holder can also be configured to itself provide the relevant reflective surface, e.g., by use of a cover slip or other feature used to achieve reflectance, including, e.g., by total internal reflectance. The sample stage is configured to accept (mount) the sample holder, and to hold the sample holder in place during operation of the system. The sample stage can include or be configured to be manipulated by robotics or other integrated features for moving or processing the sample holder.

In embodiments with an integrated illumination source and fluorescence detector, the system will typically include a lens configured to permit illumination light to pass through to the sample viewing region, and to permit a fluorescent signal from the sample viewing region to pass through to the detector. The integral illumination source and fluorescence detector typically also include a filter that permits a florescent signal from the sample to pass through to the detector, while inhibiting passage of stray or reflected illumination light to the detector. To reduce autofluorescence in the integrated optics, the reflective surface can be positioned to avoid reflection of illumination light back to the integrated source and detector.

As discussed, the system can include two or more reflective surfaces positioned to reflect the illumination light through the sample more than once. This can be achieved, e.g., by passing illumination light through a prism at one end of the sample holder, where light is reflected multiple times through the sample, e.g., by total internal reflectance, and then to a mirror/ prism arrangement that redirects the illumination light through the sample one or more additional times.

These systems can be used to perform epifluorescent signal detection, e.g., by illuminating a sample that comprises a fluorescent moiety with illumination light and reflecting illumination light that passes through the sample one or more times back through the sample. A fluorescent signal from the sample is then detected, e.g., in epifluorescence mode. In one embodiment, the signal corresponds to a sequence of a nucleic acid template present in the sample, e.g., a single as a single copy template in the sample, for single molecule detection.

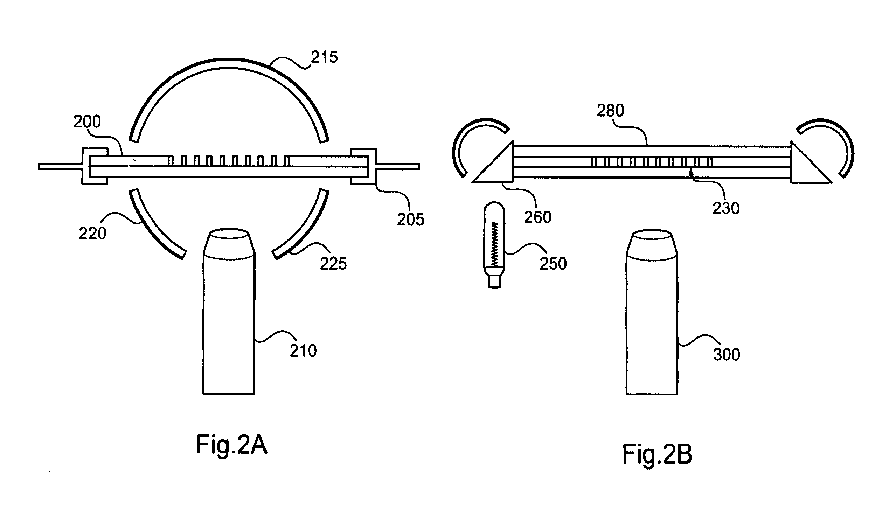

A non-limiting example array illumination system is schematically illustrated in Figure 2. Components are not necessarily to scale. As shown in panel **A,** array **200** is mounted in holder **205.** Illumination/detection optics **210** directs excitation/ illumination light through the array. Mirror **215** captures light passing through the array (either illumination or signal light) and redirects the light back through the array (and optionally to detection optics), amplifying the amount of excitation light directed through the array from the illumination optics, and also amplifying the amount of signal detected from the array. Additional mirrors **220** and **225** can additionally redirect light back through any region of the array to be viewed. These or additional mirrors can also be used to direct signals from the sample into the detection optics. Total internal reflection can also be used. One total internal reflection embodiment is illustrated in panel **B.** As shown, light passes from illumination source **250** to or through prism/mirror assembly **260,** where it is directed through array **270,** e.g., located next to layer **280** (e.g., a glass slide) that provides for total internal reflection at the interface of the array and the layer. Light is reflected by prism/mirror assembly **290** back through the array, amplifying light from illumination source **250** and signal light (e.g., fluorescence to be detected) from the array. Detector **300** detects signals from the array, e.g., fluorescence. These or additional mirrors/ prisms can be used to capture stray signals from the array (signal emissions away from the detector), to redirect them to the detector.

Thus, methods of increasing signal sensitivity for detection of a fluorescent signal produced during sequencing of a low copy number nucleic acid are provided. The copy number can be e.g., less than 5, preferably less than 4, typically less than 3, generally less than 2, and preferably 1 copy of the template. In these methods, a sequencing reaction is incubated under conditions that permit template nucleic acid dependent incorporation of one or more nucleotides into a copy nucleic acid, wherein the template nucleic acid is present at a low copy number. A sample that includes the components of the sequencing reaction is illuminated (optionally in epifluorescent mode), with light from the illumination source passing through the sample. At least a portion of the light that passes through the sample is reflected back through the sample at least once (and generally more than once, as noted herein), with the resulting fluorescent signal being detected.

For further details regarding spectroscopic techniques, suitable detectors, and an overview of fluorescent products and technologies useful in the present invention, see, e.g., Sullivan (2007) Fluorescent Proteins, Volume 85, Second Edition (Methods in Cell Biology) (Methods in Cell Biology) ISBN-10: 0123725585; Hof et al. (eds) (2005) Fluorescence Spectroscopy in Biology: Advanced Methods and their Applications to Membranes, Proteins, DNA, and Cells (Springer Series on Fluorescence) ISBN-10: 354022338X; Haughland (2005) Handbook of Fluorescent Probes and Research Products, 10th Edition (Invitrogen, Inc./ Molecular Probes); BioProbes Handbook, (2002) from Molecular Probes, Inc.; and Valeur (2001) Molecular Fluorescence: Principles and Applications Wiley ISBN-10: 352729919X. For an introduction to Raman spectroscopy, which can be used as an alternative to fluorescent detection, see, e.g., Smith and Dent (2005) Modern Raman Spectroscopy: A Practical Approach Wiley ISBN-10: 0471497940; Long (2006) The Raman Effect: A Unified Treatment of the Theory of Raman Scattering by Molecules Wiley, ISBN-10: 0471490288; and Gardiner, D.J. (1989). Practical Raman Spectroscopy. Springer-Verlag, ISBN 978-0387502540. For additional discussion of surface enhanced Raman spectroscopy and mie spectroscopy, see, e.g., Kneipp et al. (eds) (2006) Surface-Enhanced Raman Scattering: Physics and Applications (Topics in Applied Physics) Springer ISBN-10: 3540335668.

## ADDITIONAL SYSTEM/APPARATUS DETAILS

The systems and apparatus of the invention optionally include additional features such as fluid handling elements for moving reagents into contact with one another or with the surfaces of the invention, robotic elements for moving samples or surfaces, and/or the like.

Laboratory systems of the invention optionally perform, e.g., repetitive fluid handling operations (e.g., pipetting) for transferring material to or from reagent storage systems that comprise samples of interest, such as microtiter trays, ZMWs, or the like. Similarly, the systems manipulate, e.g., microtiter trays, microfluidic devices, ZMWs or other components that constitute reagents, surfaces or compositions of the invention and/or that control any of a variety of environmental conditions such as temperature, exposure to light or air, and the like. Thus, systems of the invention can include standard sample handling features, e.g., by incorporating conventional robotics or microfluidic implementations. For example, a variety of automated systems components are available from Caliper Corporation (Hopkinton, MA), which utilize conventional robotics, e.g., for Zymate™ systems, as well as a variety of microfluidic implementations. For example, the LabMicrofluidic device® high throughput screening system (HTS) is provided by Caliper Technologies, and the Bioanalyzer using LabChip™ technology is also provided by Caliper Technologies Corp and Agilent. Similarly, the common ORCA® robot, which is used in a variety of laboratory systems, e.g., for microtiter tray manipulation, is also commercially available, e.g., from Beckman Coulter, Inc. (Fullerton, CA).

Detection optics can be coupled to cameras, digital processing apparatus, or the like, to record and analyze signals detected in the various systems herein. Systems can include a microscope, a CCD, a photodiode, an LCD, a scintillation counter, film for recording signals, and the like. A variety of commercially available peripheral equipment and software is available for digitizing, storing and analyzing a digitized optical image, e.g., using PC (Intel x86 or pentium chip-compatible DOS™, OS2™ WINDOWS™, WINDOWS NT™ or WINDOWS95™ based machines), MACINTOSH™, LINUX, or UNIX based (e.g., SUN™ work station) computers or digital appliances. Computers and digital appliances can include software for analyzing and perfecting signal interpretation. This can typically include standard application software such as spreadsheet or database software for storing signal information. However, systems of the invention can also include statistical analysis software to interpret signal data. For example, Partek Incorporated (St. Peters, Mo.; www.partek.com) provides software for pattern recognition (e.g., which provide Partek Pro 2000 Pattern Recognition Software) which can be applied to signal interpretation and analysis. Relationships between datasets can be analyzed, e.g., by Principal Components Analysis (PCA) mapped scatterplots and biplots, Multi-Dimensional Scaling (MDS) mapped scatterplots, Star plots, etc. Further information regarding genetic algorithms and neural networks that can be used to analyze signal information can be found in David E. Goldberg (1989) Genetic Algorithms in Search, Optimization and Machine Learning Addison-Wesley Pub Co; ISBN: 0201157675; Timothy Masters (1993) Practical Neural Network Recipes in C++(Book & Disk edition) Academic Pr; ISBN: 0124790402; Kevin Gurney (1999) An Introduction to Neural Networks, UCL Press, 1 Gunpowder Square, London EC4A 3DE, UK; Christopher M. Bishop (1995) Neural Networks for Pattern Recognition Oxford Univ Press; ISBN: 0198538642; Brian D. Ripley, N. L. Hjort (Contributor) (1995) Pattern Recognition and Neural Networks Cambridge Univ Pr (Short); ISBN: 0521460867 and in a variety of other currently available references. Computers/digital appliances also optionally include or are operably coupled to user viewable display systems (monitors, CRTs, printouts, etc.), printers to print data relating to signal information, peripherals such as magnetic or optical storage drives, user input devices (keyboards, microphones, pointing devices) and the like.

Available automated systems can also incorporate the compositions and surfaces herein, e.g., to assess a variety of biological phenomena, including, e.g., expression levels of genes in response to selected stimuli (Service (1998) "Microchips Arrays Put DNA on the Spot" Science 282:396-399), high throughput DNA genotyping (Zhang et al. (1999) "Automated and Integrated System for High-Throughput DNA Genotyping Directly from Blood" Anal. Chem. 71:1138-1145), sequencing as described herein, and many other implementations.

While the foregoing invention has been described in some detail for purposes of clarity and understanding, it will be clear to one skilled in the art from a reading of this disclosure that various changes in form and detail can be made without departing from the true scope of the invention. For example, all the techniques and apparatus described above can be used in various combinations.

## Claims

1. A composition comprising:

   a surface, comprising a metallic particle deposited thereon;
   a nucleotide comprising two or more fluorescent labels and,
   a polymerase enzyme located on the surface proximal to the metallic particle;
   wherein the enzyme is positioned proximal to the metallic particle such that a fluorescent signal generated by the two or more fluorescent labels cleaved from the nucleotide through the action of the polymerase is increased by proximity to the metallic particle.

2. The composition of claim 1, wherein the metallic particle is a particle of a silver island film deposited on the surface.

3. The composition of claim 1 or claim 2, wherein the enzyme is chemically coupled to the surface.

4. The composition of claim 3, wherin the enzyme is chemically coupled to the surface through a linker moiety.

5. The composition of any one of claims 1 to 4, wherein the surface comprises a population of enzymes and particles selectively, uniformly or regularly deposited on the surface.

6. The composition of any one of the preceding claims, wherein the enzyme is selected from: a DNA polymerase, a Taq polymerase, an exonuclease deficient Taq polymerase, an E. coli DNA Polymerase 1, a DNA polymerase Klenow fragment, a reverse transcriptase, a wild type Φ29 polymerase, a mutant ΦM9 polymerase, an exonuclease deficient Φ29 polymerase, a T7 DNA polymerase, a T5 DNA polymerase, an RNA polymerase, or a reverse transcriptase.

7. A system, comprising:

   a first surface, comprising a metallic particle deposited thereon;
   a nucleotide comprising two or more fluorescent labels;
   a polymerase enzyme proximal to the metallic particle; and,
   a signal detector positioned to detect a fluorescent signal produced by an action of the polymerase enzyme;
   wherein the polymerase enzyme is positioned proximal to the metallic particle such that a fluorescent signal generated by the two or more fluorescent labels cleaved from the nucleotide through the action of the polymerase is increased by proximity to the metallic particle.

8. The system of claim 7, wherein the system comprises an illumination source that illuminates the enzyme, particle or substrate, and the metallic particle is smaller in at least one dimension than a wavelength of light from the illumination source.

9. The system of claim 7 or claim 8, wherein the enzyme or metallic particle is coupled to a second surface located proximal to the first surface.

10. The system of any one of claims 7 to 9, comprising an interference structure capable of interfering with detection of the signal, wherein the interference structure is located proximal to the surface, and the enzyme and metallic particle are located distal to the interference structure, thereby reducing signal interference.

11. The system of claim 10, wherein the interference structure is a wall of a zero mode waveguide, wherein the enzyme and metallic particle are located on the first surface at a point distal to the wall of the zero mode waveguide.

12. The system of any one of claims claim 7 to 11, wherein the signal detector detects fluorescence, raman scattering, mie scattering, or surface enhanced raman scattering.

13. The system of any one of claims 7 to 12, wherein the two or more cleaved fluorescent labels fluoresce, thereby increasing plasmon resonance of a proximal metal particle, wherein a detected signal results from the increased plasmon resonance.

**14.** A method of obtaining an enhanced signal from a polymerase reaction, the method comprising:

coupling the polymerase to a first surface proximal to a metallic particle, and
performing a polymerization reaction with the polymerase, using nucleotides comprising two or more fluorescent labels,
wherein proximity of the polymerase to the particle enhances a signal generated by the two or more fluorescent labels cleaved from the nucleotide through the action of the polymerase.

**Patentansprüche**

**1.** Zusammensetzung, umfassend:

eine Oberfläche, die ein darauf abgelagertes Metallteilchen umfasst,
ein Nucleotid, das zwei oder mehr fluoreszierende Markierungen umfasst, und
ein Polymeraseenzym, das sich an der Oberfläche proximal zu dem Metallteilchen befindet,
worin das Enzym proximal zu dem Metallteilchen positioniert ist, so dass ein von den zwei oder mehr fluoreszierenden Markierungen, die durch die Wirkung der Polymerase von dem Nucleotid abgespalten werden, abgegebenes fluoreszierendes Signal durch seine Nähe zum Metallteilchen verstärkt wird.

**2.** Zusammensetzung nach Anspruch 1, worin das Metallteilchen ein Teilchen eines auf der Oberfläche abgelagerten Silberinsel-Films ist.

**3.** Zusammensetzung nach Anspruch 1 oder Anspruch 2, worin das Enzym chemisch an die Oberfläche gebunden ist.

**4.** Zusammensetzung nach Anspruch 3, worin das Enzym durch eine Linkergruppierung chemisch an die Oberfläche gebunden ist.

**5.** Zusammensetzung nach einem der Ansprüche 1 bis 4, worin die Oberfläche eine Population von Enzymen und Teilchen umfasst, die selektiv, gleichmäßig oder regelmäßig auf der Oberfläche abgelagert sind.

**6.** Zusammensetzung nach einem der vorangegangenen Ansprüche, worin das Enzym aus einer DNA-Polymerase, einer Taq-Polymerase, einer exonucleasedefizienten Taq-Polymerase, einer *E.-coli*-DNA-Polymerase 1, einem DNA-Polymerase-Klenow-Fragment, einer reversen Transkriptase, einer Wildtyp-Φ29-Polymerase, einer mutierten Φ29-Polymerase, einer exonucleasedefizienten Φ29-Polymerase,, einer T7-DNA-Polymerase, einer T5-DNA-Polymerase, einer RNA-Polymerase und einer reversen Transkriptase ausgewählt ist.

**7.** System, umfassend:

eine erste Oberfläche, die ein darauf abgelagertes Metallteilchen umfasst,
ein Nucleotid, das zwei oder mehr fluoreszierende Markierungen umfasst,
ein Polymeraseenzym proximal zu dem Metallteilchen und
einen zum Detektieren eines durch eine Wirkung des Polymeraseenzyms erzeugten fluoreszierenden Signals positionierten Signaldetektor,
worin das Polymeraseenzym proximal zu dem Metallteilchen positioniert ist, so dass ein von den zwei oder mehr fluoreszierenden Markierungen, die durch die Wirkung der Polymerase von dem Nucleotid abgespalten werden, abgegebenes fluoreszierendes Signal durch seine Nähe zum Metallteilchen verstärkt wird.

**8.** System nach Anspruch 7, worin das System eine Lichtquelle umfasst, die das Enzym, Teilchen oder Substrat beleuchtet, und das Metallteilchen in zumindest einer Abmessung kleiner ist als eine Wellenlänge des Lichts aus der Lichtquelle.

**9.** System nach Anspruch 7 oder Anspruch 8, worin das Enzym oder Metallteilchen an eine zweite, proximal zu der ersten Oberfläche befindliche Oberfläche gebunden ist.

**10.** System nach einem der Ansprüche 7 bis 9, umfassend eine Störstruktur, die in der Lage ist, die Detektion des Signals zu stören, worin sich die Störstruktur proximal zu der Oberfläche befindet und das Enzym und das Metallteilchen sich distal zu der Störstruktur befinden, wodurch die Signalstörung reduziert wird.

**11.** System nach Anspruch 10, worin die Störstruktur eine Wand eines Nullmoduswellenleiters ist, worin das Enzym und das Metallteilchen sich auf der ersten Oberfläche an einem zu der Wand des Nullmoduswellenleiters distalen Punkt befinden.

**12.** System nach einem der Ansprüche 7 bis 11, worin der Signaldetektor Fluoreszenz, Raman-Streuung, Mie-Streuung oder oberflächenverstärkte Raman-Streuung detektiert.

**13.** System nach einem der Ansprüche 7 bis 12, worin die zwei oder mehr gespaltenen Fluoreszenzmarkierungen fluoreszieren und dadurch die Plasmonenresonanz eines proximalen Metallteilchens erhöhen, worin ein detektiertes Signal aus der erhöhten Plasmonenresonanz entsteht.

**14.** Verfahren zur Gewinnung eines verstärkten Signals aus einer Polymerasereaktion, das Folgendes umfasst:

das Binden der Polymerase an eine erste, zu einem Metallteilchen proximale Oberfläche und das Durchführen einer Polymerisationsreaktion mit der Polymerase unter Verwendung von Nucleotiden, die zwei oder mehr fluoreszierende Markierungen umfassen,
worin die Nähe der Polymerase zu dem Teilchen ein von den zwei oder mehr fluoreszierenden Markierungen, die durch die Wirkung der Polymerase von dem Nucleotid abgespalten werden, abgegebenes fluoreszierendes Signal verstärkt.

**Revendications**

**1.** Composition comprenant:

une surface, comprenant une particule métallique déposée sur celle-ci;
un nucléotide comprenant deux ou plusieurs marqueurs fluorescents et
une enzyme polymérase située sur la surface à proximité de la particule métallique;
où l'enzyme est positionnée à proximité de la particule métallique de telle sorte qu'un signal fluorescent produit par les deux ou plusieurs marqueurs fluorescents clivés du nucléotide par l'action de la polymérase est augmenté par la proximité à la particule métallique.

**2.** Composition selon la revendication 1, où la particule métallique est une particule d'un film d'îlot d'argent déposé sur la surface.

**3.** Composition selon la revendication 1 ou la revendication 2, où l'enzyme est couplé chimiquement à la surface.

**4.** Composition selon la revendication 3, où l'enzyme est chimiquement couplé à la surface par un fragment de liaison.

**5.** Composition selon l'une quelconque des revendications 1 à 4, où la surface comprend une population d'enzymes et de particules sélectivement, uniformément ou régulièrement déposées sur la surface.

**6.** Composition selon l'une quelconque des revendications précédentes, où l'enzyme est sélectionné parmi: une polymérase d'ADN, une polymérase de Taq, une polymérase de Taq déficiente en exonucléase, une polymérase 1 d'ADN E. coli, un fragment de Klenow de polymérase d'ADN, une transcriptase inverse, une polymérase 29 de type sauvage, une polymérase Φ29 mutante, une polymérase Φ 29 déficiente en exonucléase, une polymérase d'ADN T7, une polymérase d'ADN T5, une polymérase d'ARN ou une transcriptase inverse.

**7.** Système, comprenant:

une première surface, comprenant une particule métallique déposée sur celle-ci;
un nucléotide comprenant deux ou plusieurs marqueurs fluorescents;
une enzyme de polymérase proximale à la particule métallique; et
un détecteur de signaux positionné pour détecter un signal fluorescent produit par une action de l'enzyme de polymérase;
où l'enzyme de polymérase est positionnée à proximité de la particule métallique de telle sorte qu'un signal fluorescent produit par les deux ou plusieurs marqueurs fluorescents clivés du nucléotide par l'action de la polymérase est augmenté par la proximité à la particule métallique.

**8.** Système selon la revendication 7, où le système comprend une source d'illumination qui illumine l'enzyme, la particule ou le substrat, et la particule métallique est plus petite dans au moins une dimension qu'une longueur d'onde de lumière de la source d'illumination.

**9.** Système selon la revendication 7 ou la revendication 8, où l'enzyme ou la particule métallique est couplée à une deuxième surface située proximalement à la première surface.

**10.** Système selon l'une quelconque des revendications 7 à 9, comprenant une structure d'interférence apte à interférer avec la détection du signal, où la structure d'interférence est située proximalement à la surface, et l'enzyme et la particule métallique sont situées distalement à la structure d'interférence, en réduisant ainsi l'interférence des signaux.

**11.** Système selon la revendication 10, où la structure d'interférence est une paroi d'un guide d'onde de mode zéro, où l'enzyme et la particule métallique sont localisés sur la première surface à un point distal à la paroi du guide d'onde de mode zéro.

**12.** Système selon l'une quelconque des revendications 7 à 11, où le détecteur de signaux détecte la fluorescence, la diffusion Raman, la diffusion de Mie, ou une diffusion Raman à surface augmentée.

**13.** Système selon l'une quelconque des revendications 7 à 12, où deux ou plusieurs étiquettes fluorescentes clivées sont fluorescentes en augmentant ainsi la résonance plasmonique d'une particule métallique proximale, où un signal détecté résulte de la résonance plasmonique augmentée.

14. Procédé d'obtention d'un signal renforcé d'une réaction de polymérase, le procédé comprenant:

coupler la polymérase à une première surface proximale à une particule métallique, et
exécuter une réaction de polymérisation avec la polymérase en utilisant des nucléotides comprenant deux ou plusieurs marqueurs fluorescents,
où la proximité de la polymérase à la particule renforce un signal produit par les deux ou plusieurs marqueurs fluorescents clivés du nucléotide par l'action de la polymérase.

Fig.1A

Fig.1B

EP 2 134 871 B1

Fig.2B

Fig.2A

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5982534 A
- US 6169289 B
- US 20040241678 A
- US 5491074 A
- WO 2002086075 A
- WO 2002085923 A
- WO 2004094593 A
- WO 2005019415 A
- WO 2005007870 A
- WO 2005007624 A
- US PN5635608 A, Haugland and Gee
- US PN5998580 A, Fay
- US 5122614 A, Zalipsky
- US 5650234 A, Dolence
- US 20030044781 A
- US 6917726 B
- US 2006449122 W
- US 24180905 A
- US 20030124576 A
- US 2006049122 W
- US 5001050 A
- US 5198543 A
- US 5576204 A

### Non-patent literature cited in the description

- **LEVENE et al.** Zero-Mode Waveguides for Single Molecule Analysis at High Concentrations. *Science,* 2003, vol. 299, 682-686
- **ASLAN et al.** Metal-enhanced fluorescence: an emerging tool in biotechnology. *Current Opinion in Biotechnology,* 2005, vol. 16, 55-62
- **LAKOWICZ et al.** Intrinsic Fluorescence from DNA Can Be Enhanced by Metallic Particles. *Biochemical and Biophysical Research Communications,* 2001, vol. 286, 875-879
- **DREXHAGE.** Interaction of light with monomolecular dye lasers. *Progress in Optics,* 1974, 161-232
- **SOKOLOV et al.** Enhancement of molecular fluorescence near the surface of colloidal metal films. *Anal Chem.,* 1998, vol. 70, 3989-3905
- **HUTTER et al.** Exploitation of Localized Surface Plasmon Resonance. *Adv. Mater.,* 2004, vol. 16 (19), 1685-1706
- **ASLAN et al.** Plasmon light scattering in biology and medicine: new sensing approaches, visions and perspectives. *Current Opinion in Chemical Biology,* 2005, vol. 9, 538-544
- **SMITH et al.** Surface Plasmon Resonance Imaging as a Tool to Monitor Biomolecular Interactions in an Array Based Format. *Appl. Spectroscopy.,* vol. 57, 320A-332A
- **ASLAN, ID ; LAKOWICZ.** Radiative decay engineering: biophysical and biomedical applications. *Anal Biochem,* 2001, vol. 298, 1-24
- **GEDDES et al.** Photodeposition of silver can result in metal enhanced fluorescence. *Appl. Spectrosc,* 2003, vol. 57, 526-531
- **GEDDES et al.** Electrochemical and laser deposition of silver for use in metal enhanced fluorescence. *Langmuir,* 2003, vol. 19, 6236-6241
- **ALSAN et al.** Fast and Slow deposition of Silver Nanorods on to glass substrates. *J. Phys Chem B.,* 2005
- **GEDDES et al.** Metal enhanced fluorescence due to silver colloids on a planar surface'' potential applications of indocyannine green to in vivo imaging. *J. Phys. Chem A,* 2003, vol. 107, 3443-3449
- **HANZEL et al.** *PROTEIN ENGINEERING STRATEGIES TO OPTIMIZE ACTIVITY OF SURFACE ATTACHED PROTEINS,* vol. 11 (645), 135
- **HANZEL et al.** *ACTIVE SURFACE COUPLED POLYMERASES,* vol. 11 (645), 125
- **BURGERS et al.** Eukaryotic DNA polymerases: proposal for a revised nomenclature. *J Biol Chem.,* 2001, vol. 276 (47), 43487-90
- **HÜBSCHER et al.** EUKARYOTIC DNA POLYMERASES. *Annual Review of Biochemistry,* 2002, vol. 71, 133-163
- **ALBA.** Protein Family Review: Replicative DNA Polymerases. *Genome Biology,* 2001, vol. 2 (1), 3002.1-3002.4
- **STEITZ.** DNA polymerases: structural diversity and common mechanisms. *J Biol Chem,* 1999, vol. 274, 17395-17398
- **HANZEL.** *POLYMERASES FOR NUCLEOTIDE ANALOGUE INCORPORATION,* vol. 11 (645), 223

- **NILSSON et al.** Affinity fusion strategies for detection, purification, and immobilization of recombinant proteins. *Protein Expression and Purification,* 1997, vol. 11, 1-16
- **TERPE et al.** Overview of tag protein fusions: From molecular and biochemical fundamentals to commercial systems. *Applied Microbiology and Biotechnology,* 2003, vol. 60, 523-533
- **SAMBROOK et al.** Molecular Cloning - A Laboratory Manual. Cold Spring Harbor Laboratory, 2000, vol. 1-3
- Current Protocols in Molecular Biology). Current Protocols. Greene Publishing Associates, Inc. and John Wiley & Sons, Inc, 2005
- **INNIS et al.** PCR Protocols A Guide to Methods and Applications. Academic Press Inc, 1990
- **GILIMAN & SMITH.** *Gene,* 1979, vol. 8, 81
- **ROBERTS et al.** *Nature,* 1987, vol. 328, 731
- **SCHNEIDER, B. et al.** *Protein Expr. Purif.,* 1995, vol. 6435, 10
- **WATSON et al.** Recombinant DNA. Scientific American Books, 1992
- **FRESHNEY.** Culture of Animal Cells, a Manual of Basic Technique. Wiley- Liss, 1994
- **PAYNE et al.** Plant Cell and Tissue Culture in Liquid Systems. John Wiley & Sons, Inc, 1992
- Plant Cell, Tissue and Organ Culture. Fundamental Methods Springer Lab Manual. Springer-Verlag, 1995
- The Handbook of Microbiological Media. CRC Press, 1993
- **R. SCOPES.** Protein Purification. Springer-Verlag, 1982
- **DEUTSCHER.** Methods in Enzymology Vol. 182: Guide to Protein Purification. Academic Press, Inc, 1992, vol. 182
- **SANDANA.** Bioseparation of Proteins. Academic Press, Inc, 1997
- **BOLLAG et al.** Protein Methods. Wiley-Liss, 1996
- **WALKER.** The Protein Protocols Handbook. Humana Press, 1996
- **HARRIS ; ANGAL.** Protein Purification Applications: A Practical Approach. IRL Press, 1990
- **HARRIS ; ANGAL.** Protein Purification Methods: A Practical Approach. IRL Press
- **SCOPES.** Protein Purification: Principles and Practice. Springer Verlag, 1993
- **JANSON ; RYDEN.** Protein Purification: Principles, High Resolution Methods and Applications. Wiley-VCH, 1998
- **WALKER.** Protein Protocols on CD-ROM. Humana Press, 2002
- Current Protocols in Protein Science. Current Protocols, 2005
- Handbook of Bioseparations. Academic Press, 2000
- **WANG et al.** *Science,* 2001, vol. 292, 498-500
- **CHIN et al.** *Journal of the American Chemical Society,* 2002, vol. 124, 9026-9027
- **CHIN ; SCHULTZ.** *ChemBioChem,* 2002, vol. 11, 1135-1137
- **CHIN et al.** *PNAS United States of America,* 2002, vol. 99, 11020-11024
- **WANG ; SCHULTZ.** *Chem. Comm.,* 2002, 1-10
- *Neuro,* 1997, vol. 19, 465
- *J Physiol,* 1998, vol. 508.3, 801
- *Proc Natl Acad Sci USA,* 08 September 1988, vol. 5 (17), 6571-5
- *J Biol Chem,* 14 February 1997, vol. 272 (7), 4172-8
- *Neuron,* 1998, vol. 20, 619-624
- *Nature Genetics,* 2001, vol. 28, 317-325
- *Nature,* 1998, vol. 392, 936-941
- **PAN, P. ; BAYLEY, H.** Caged cysteine and thiophosphoryl peptides. *FEBS Letters,* 1997, vol. 405, 81-85
- **PETTIT et al.** Chemical two-photon uncaging: a novel approach to mapping glutamate receptors. *Neuron,* 1997, vol. 19, 465-471
- **FURUTA et al.** Brominated 7-hydroxycoumarin-4-ylmethyls: novel photolabile protecting groups with biologically useful cross-sections for two photon photolysis. *Proc. Natl. Acad. Sci.,* 1999, vol. 96 (4), 1193-1200
- **ZOU et al.** Catalytic subunit of protein kinase A caged at the activating phosphothreonine. *J. Amer. Chem. Soc.,* 2002, vol. 124, 8220-8229
- **ZOU et al.** Caged Thiophosphotyrosine Peptides. *Angew. Chem. Int. Ed.,* 2001, vol. 40, 3049-3051
- **CONRAD II et al.** p-Hydroxyphenacyl Phototriggers: The reactive Excited State of Phosphate Photorelease. *J. Am. Chem. Soc.,* 2000, vol. 122, 9346-9347
- **CONRAD II et al.** New Phototriggers 10: Extending the $\pi,\pi^*$ Absorption to Release Peptides in Biological Media. *Org. Lett.,* 2000, vol. 2, 1545-1547
- **GIVENS et al.** A New Phototriggers 9: p-Hydroxyphenacyl as a C-Terminus Photoremovable Protecting Group for Oligopeptides. *J. Am. Chem. Soc.,* 2000, vol. 122, 2687-2697
- **BISHOP et al.** 40-Aminomethyl-2,20-bipyridyl-4-carboxylic Acid (Abc) and Related Derivatives: Novel Bipyridine Amino Acids for the Solid-Phase Incorporation of a Metal Coordination Site Within a Peptide Backbone. *Tetrahedron,* 2000, vol. 56, 4629-4638
- **CHING et al.** Polymers As Surface-Based Tethers with Photolytic triggers Enabling Laser-Induced Release/Desorption of Covalently Bound Molecules. *Bioconjugate Chemistry,* 1996, vol. 7, 525-8
- BioProbes Handbook. Molecular Probes, Inc, 2002

- Handbook of Fluorescent Probes and Research Products. Molecular Probes, Inc
- **KOSSEL et al.** *PNAS,* 2001, vol. 98, 14702-14707
- *Trends Plant Sci,* 1999, vol. 4, 330-334
- *PNAS,* 1998, vol. 95, 1568-1573
- *J Am Chem Soc,* 2002, vol. 124, 8220-8229
- *Pharmacology & Therapeutics,* 2001, vol. 91, 85-92
- *Angew Chem Int Ed Engl,* 2001, vol. 40, 3049-3051
- **PIRRUNG ; HUANG.** A general method for the spatially defined immobilization of biomolecules on glass surfaces using 'caged' biotin. *Bioconjug Chem.,* 1996, vol. 7, 317-21
- **JONES.** Amino Acid and Peptide Synthesis. Oxford University Press, 1992
- **SANDLER et al.** Organic Functional Group Preparations. Academic Press, Inc, 1983
- **HARRIS.** *Rev. Macromol. Chem. Phys.,* 1985, vol. C25 (3), 325-373
- **ZALIPSKY et al.** *Eur. Polym. J.,* 1983, vol. 19 (12), 1177-1183
- **ATHERTON et al.** Solid Phase Peptide Synthesis. IRL Press, 1989
- **GREENE et al.** Protective Groups In Organic Chemistry. John Wiley & Sons, 1991
- **FODOR et al.** *Science,* 1991, vol. 251, 767-777
- **WANG.** *J. Org. Chem.,* 1976, vol. 41, 3258
- **RICH et al.** *J. Am. Chem. Soc.,* 1975, vol. 97, 1575-1579
- **LEVENE et al.** Zero-mode waveguides for single-molecule analysis at high concentrations. *Science,* 2003, vol. 299, 682-686
- The Handbook - A Guide to Fluorescent Probes and Labeling Technologies. 2005
- **BURGERS et al.** Eukaryotic DNA polymerases: proposal for a revised nomenclature. *J Biol Chem,* 2001, vol. 276 (47), 43487-90
- **GILLER et al.** Incorporation of reporter molecule-labeled nucleotides by DNA polymerases. I. Chemical synthesis of various reporter group-labeled 2'-deoxyribonucleoside-5'-triphosphates. *Nucleic Acids Res.,* 2003, vol. 31 (10), 2630-2635
- **AUGUSTIN et al.** Progress towards single-molecule sequencing: enzymatic synthesis of nucleotide-specifically labeled DNA. *J. Biotechnol.,* 2001, vol. 86, 289-301
- **TONON et al.** Spectral karyotyping combined with locus-specific FISH simultaneously defines genes and chromosomes involved in chromosomal translocations. *Genes Chromosom. Cancer,* 2000, vol. 27, 418-423
- **ZHU ; WAGGONER.** Molecular mechanism controlling the incorporation of fluorescent nucleotides into DNA by PCR. *Cytometry,* 1997, vol. 28, 206-211
- **YU et al.** Cyanine dye dUTP analogs for enzymatic labeling of DNA probes. *Nucleic Acids Res.,* 1994, vol. 22, 3226-3232
- **ZHU et al.** Directly labeled DNA probes using fluorescent nucleotides with different length linkers. *Nucleic Acids Res.,* 1994, vol. 22, 3418-3422
- **RIED et al.** Simultaneous visualization of seven different DNA probes by in situ hybridization using combinatorial fluorescence and digital imaging microscopy. *Proc. Natl Acad. Sci. USA,* 1992, vol. 89, 1388-1392
- **MEIJER et al.** Φ29 Family of Phages. *Microbiology and Molecular Biology Reviews,* 2001, vol. 65 (2), 261-287
- Fluorescent Proteins. Methods in Cell Biology. 2007, vol. 85
- Fluorescence Spectroscopy in Biology: Advanced Methods and their Applications to Membranes, Proteins, DNA, and Cells. Springer Series on Fluorescence, 2005
- **HAUGHLAND.** Handbook of Fluorescent Probes and Research Products. Invitrogen, Inc./ Molecular Probes, 2005
- **VALEUR.** Molecular Fluorescence: Principles and Applications. Wiley, 2001
- **SMITH ; DENT.** Modern Raman Spectroscopy: A Practical Approach. Wiley, 2005
- **LONG.** The Raman Effect: A Unified Treatment of the Theory of Raman Scattering by Molecules. Wiley, ISBN-10: 0471490288, 2006
- **GARDINER, D.J.** Practical Raman Spectroscopy. Springer-Verlag, 1989
- Surface-Enhanced Raman Scattering: Physics and Applications (Topics in Applied Physics. Springer, 2006
- **DAVID E. GOLDBERG.** Genetic Algorithms in Search, Optimization and Machine Learning. Addison-Wesley Pub Co, 1989
- **TIMOTHY MASTERS.** Practical Neural Network Recipes in C++(Book & Disk edition. Academic Pr, 1993
- **KEVIN GURNEY.** An Introduction to Neural Networks. UCL Press, 1999
- **CHRISTOPHER M. BISHOP.** Neural Networks for Pattern Recognition. Oxford Univ Press, 1995
- **BRIAN D. RIPLEY ; N. L. HJORT.** Pattern Recognition and Neural Networks. Cambridge Univ Pr (Short, 1995
- **SERVICE.** Microchips Arrays Put DNA on the Spot. *Science,* 1998, vol. 282, 396-399
- **ZHANG et al.** Automated and Integrated System for High-Throughput DNA Genotyping Directly from Blood. *Anal. Chem.,* 1999, vol. 71, 1138-1145